(19) Europäisches Patentamt
European Patent Office
Office européen des brevets

(11) EP 2 752 928 B1

(12) **EUROPEAN PATENT SPECIFICATION**

(45) Date of publication and mention of the grant of the patent:
**22.11.2017 Bulletin 2017/47**

(21) Application number: **12826803.4**

(22) Date of filing: **24.08.2012**

(51) Int Cl.:
***H01M 8/02*** *(2016.01)* ***C08G 65/40*** *(2006.01)*
***C08G 81/00*** *(2006.01)* ***C08J 5/00*** *(2006.01)*
***H01B 1/06*** *(2006.01)* ***H01M 8/10*** *(2016.01)*

(86) International application number:
**PCT/JP2012/071408**

(87) International publication number:
**WO 2013/031675 (07.03.2013 Gazette 2013/10)**

(54) **POLYMER ELECTROLYTE MEMBRANE, MEMBRANE ELECTRODE ASSEMBLY USING SAME, AND SOLID POLYMER FUEL CELL**

POLYMERELEKTROLYTMEMBRAN, MEMBRANELEKTRODENANORDNUNG DAMIT UND FESTPOLYMERBRENNSTOFFZELLE

MEMBRANE ÉLECTROLYTE POLYMÈRE, ENSEMBLE ÉLECTRODE À MEMBRANE QUI UTILISE CETTE DERNIÈRE ET PILE À COMBUSTIBLE À POLYMÈRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2011 JP 2011185667**

(43) Date of publication of application:
**09.07.2014 Bulletin 2014/28**

(73) Proprietor: **Toray Industries, Inc.**
**Tokyo 103-8666 (JP)**

(72) Inventors:
- **UMEDA, Hiroaki**
**Otsu-shi**
**Shiga 520-8558 (JP)**
- **IZUHARA, Daisuke**
**Otsu-shi**
**Shiga 520-8558 (JP)**
- **AMANO, Emi**
**Otsu-shi**
**Shiga 520-8558 (JP)**

(74) Representative: **Hoefer & Partner Patentanwälte mbB**
**Pilgersheimer Straße 20**
**81543 München (DE)**

(56) References cited:
**EP-A1- 1 449 886** **WO-A1-2008/018487**
**WO-A1-2011/016444** **JP-A- 2004 031 307**
**JP-A- 2005 126 684** **JP-A- 2006 278 321**
**JP-A- 2008 007 759** **JP-A- 2011 181 423**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 752 928 B1

## Description

### Technical Field

The present invention relates to a polymer electrolyte membrane of high industrial applicability exhibiting excellent proton conductivity even under low-humidification and low-temperature conditions, and achieving excellent mechanical strength, fuel-barrier property, and long term durability, a membrane electrode assembly and a polymer electrolyte fuel cell using the membrane.

### Background Art

Fuel cells are a kind of power generator which extracts electric energy through electrochemical oxidation of fuels such as hydrogen and methanol. In recent years, the fuel cells have drawn attention as a clean energy supply source. Among fuel cells, polymer electrolyte fuel cell is operated at a low standard working temperature of approximately 100°C, and provides high energy density, and thus the polymer electrolyte fuel cell is expected to be widely applied as relatively small-scale distributed power facilities and as mobile power generator on automobile, and ship. In addition, the polymer electrolyte fuel cell also draws attention as power source of small-scale mobile apparatus and portable apparatus, and is expected to be mounted on cell phone, personal computer, in place of nickel-hydrogen battery and lithium-ion battery.
A normal fuel cell is constituted by cell units, the cell unit having a configuration of a membrane electrode assembly (hereinafter referred to also as MEA) being sandwiched between separators, and the MEA is constituted by an anode electrode and a cathode electrode in which a reaction of power generation occurs, and by a polymer electrolyte membrane serving as a proton conductor between the anode and the cathode. The polymer electrolyte membrane is mainly constituted by a polymer electrolyte material. The polymer electrolyte material is also used as a binder of an electrode catalyst layer.
The characteristics required of the polymer electrolyte membrane include, first, high proton conductivity. In addition, since the polymer electrolyte membrane also functions as a barrier for preventing direct reaction between fuel and oxygen, low permeability of fuel is required. Other necessary characteristics include chemical stability for withstanding strong oxidizing atmosphere during operation of the fuel cell, mechanical strength and physical durability for satisfying thinning of membrane and for withstanding repeated swell-drying cycles.
Since proton conductivity depends on water content of the membrane, a high humidity condition has to be maintained in order to develop high power generation performance as a fuel cell. Along with this, there arises a problem of increasing the load on a humidification apparatus, and a problem of considerably deteriorating the proton conductivity to thereby fail in generating power because the water in the conduction membrane involved in the proton conduction freezes below the freezing point thereof.
Responding to these problems, conventionally, as the polymer electrolyte membranes, there is widely used Nafion (registered trade name, manufactured by DuPont) which is a perfluoro-sulfonate-based polymer. Although Nafion (registered trade name) exhibits high proton conductivity under low-humidification conditions through a proton conduction channel originated from a cluster structure, Nafion has a problem of being extremely expensive because of multistep synthesis, and a problem of large fuel-crossover (transmission amount of fuel) due to the cluster structure. In addition, as to Nafion, there were pointed out a problem of losing membrane mechanical strength and physical durability by swelling-drying, a problem in which the use at high temperatures is not possible because of low softening point, a problem of waste disposal after use, and further an issue of difficulty in recycling the material.
In order to overcome these drawbacks, there have been activated in recent years the development of hydrocarbon-based polymer electrolyte membranes which are capable of replacing Nafion (registered trade name) and which are inexpensive and excellent in membrane characteristics. Above all, specifically, there are several attempts to focus attention on the phase-separated structure in order to improve the proton conductivity under low-humidification conditions.
Patent Documents 1 to 3 propose a series of polymer which is a block copolymer having a segment not containing a sulfonic acid group and a segment containing a sulfonic acid group, and in which the phase-separated structure of the block copolymer exhibits a lamellar structure or a co-continuous structure.
Patent Documents 4 and 5 describe respectively a block copolymer in which the segment includes a tough aromatic polyether ketone (PEK)-based polymer.

### Citation List

#### Patent Literature

Patent Document 1: Japanese Patent Laid-Open No. 2005-190830
Patent Document 2: Japanese Patent Laid-Open No. 2005-216525
Patent Document 3: Japanese Patent Laid-Open No. 2011-023308
Patent Document 4: Japanese Patent Laid-Open No. 2005-126684
Patent Document 5: International Publication WO No. 2008-018487 Brochure

Summary of Invention

Technical Problem

However, the present inventors found that the prior art has the following-given problems. The block copolymers described in Patent Documents 1 to 3 likely become brittle and have poor physical durability because the basic skeleton uses an amorphous polymer having high glass transition temperature, though their lamellar structure and co-continuous structure are effective in the point of improving the proton conductivity while maintaining adequate sulfonic acid group density. In addition, they have further problems in deteriorating hot water resistance and physical durability resulted from the presence of a large quantity of sulfonic acid group having high water absorbance.

As a polymer having high toughness and crystallinity to solve these problems, Patent Document 4 gives a preferred example of block copolymer including PEK as the former segment and sulfonated polyetherether ketone as the latter segment. The Patent Document 4, however, does not describe the synthesis of PEK segment not introduced the sulfonic acid group which has high crystallinity and completely insoluble in solvent thereinto, thus the Patent Document 4 does not give detailed investigation of the block copolymer, including the phase-separated structure. Furthermore, since the block copolymers contain phenylene group and biphenylene group, having high electron density and giving high reactivity, being sandwiched between ether group and ether group, and since these activated groups introduced sulfonic acid thereinto, there occur oxidation deterioration and insufficient chemical stability against de-sulfonation.

To these problems, Patent Document 5 deals with an electrolyte membrane including a block copolymer of aromatic PEK obtained by a manufacturing method including protection and deprotection of ketone moiety, and confirms high proton conductivity caused by the crystallinity and the phase-separated structure. Since, however, no linker is applied, the polymerization temperature increases, and the side reactions such as randomization, segment cutting, caused by the ether-exchange proceed in a part, thus the phase-separated structure given on the electrolyte membrane lacks the homogeneity, in some cases, and further no co-continuous and lamellar structure is observed, which fails to achieve higher proton conductivity under low-humidification conditions.

As described above, the polymer electrolyte materials according to prior art are insufficient as the means for improving economy, processability, proton conductivity, mechanical strength, chemical stability, and physical durability, thus they cannot serve as industrially useful polymer electrolyte materials.

Responding to the background of prior art, the present invention provides a polymer electrolyte membrane that exhibits excellent proton conductivity even under low-humidification and low-temperature conditions, and achieves excellent mechanical strength and fuel-barrier property, and when used as a polymer electrolyte fuel cell, achieves high output, high energy density, and long term durability, and provides a membrane electrode assembly and a polymer electrolyte fuel cell using thereof. Solution to Problem

The present invention is defined in the appended claims. To solve the above problems, the present invention adopts the following means. That is, the polymer electrolyte membrane in the first aspect of the present invention is a polymer electrolyte membrane which comprises a block copolymer containing each one or more of: a segment (A1) containing an ionic group; and a segment (A2) not containing an ionic group, and one or more linker moieties which are able to connect the segment (A1) with the segment (A2) while suppressing randomization and segment-cutting by the ether-exchange reaction; wherein a number average molecular weight of the segment (A1) is 15, 000 or larger; wherein the molar composition ratio of the segment (A1) to the segment (A2), (A1)/(A2), is 0.15 or larger and 5 or smaller; the ionic group is sulfonic acid group; wherein the ion exchange capacity of the block copolymer is 1.4 meq/g or larger; the polymer electrolyte membrane forms a co-continuous or lamellar phase-separated structure; the cycle length of which is 100 nm or smaller; and a crystallization heat quantity determined by differential scanning calorimetry is 0.1 J/g or larger, or a degree of crystallinity determined by wide-angle X-ray diffractometry is 0.5% or larger, wherein the segment (A1) containing an ionic group contains the constituent unit represented by a general formula (S1) described below,

[Chemical formula 3]

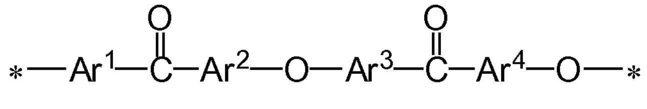

(S1)

where, in the general formula (S1), $Ar^1$ to $Ar^4$ are each an arbitrary divalent arylene group; $Ar^1$ and/or $Ar^2$ contains an ionic group; $Ar^3$ and $Ar^4$ can contain or not contain an ionic group; $Ar^1$ to $Ar^4$ can each be arbitrarily substituted, and in $Ar^1$ to $Ar^4$, two or more kinds of arylene groups can be independently used; and the symbol * signifies a bond moiety with the general formula (S1) or with other constituent unit,
wherein the segment (A1) containing an ionic group contains 20 mol% or more of the constituent unit represented by the general formula (S1),
wherein the segment (A2) not containing an ionic group contains a constituent unit represented by a general formula (S2) described below,

[Chemical formula 2]

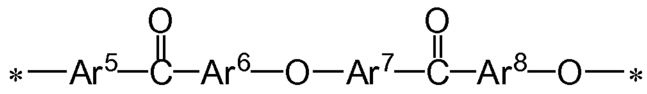
(S2)

where, in the general formula (S2), Arts to $Ar^8$ are each an arbitrary divalent arylene group, which can each be arbitrarily substituted, and which do not contain an ionic group; in Arts to $Ar^8$, two or more kinds of arylene group can be independently used; and the symbol * signifies a bond moiety with the general formula (S2) or with other constituent unit, and
wherein the segment (A2) not containing an ionic group contains 20 mol% or more of the constituent unit represented by the general formula (S2).

Further described but not part of the present invention is a polymer electrolyte membrane which comprises a block copolymer containing each one or more of: the segment (A1) containing an ionic group; and the segment (A2) not containing an ionic group, wherein the polymer electrolyte membrane forms a co-continuous or lamellar phase-separated structure, and the segment (A2) not containing an ionic group comprises a repeating unit represented by the general formula (Q1),

[Chemical formula 1]

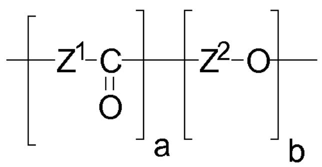
(Q1)

where, in the general formula (Q1), $Z^1$ and $Z^2$ are each a divalent organic group containing aromatic ring, and each may be two or more kinds of groups, and do not contain an ionic group; and a and b are each independently a positive integer.

Furthermore, the membrane electrode assembly and the polymer electrolyte fuel cell according to the present invention are structured using the polymer electrolyte membrane. Advantageous Effects of the Invention

The polymer electrolyte membrane, the membrane electrode assembly using thereof, and the polymer electrolyte fuel cell according to the present invention exhibit excellent proton conductivity even under low-humidification conditions, exhibit excellent mechanical strength and chemical stability, and when used in a polymer electrolyte fuel cell, achieve excellent physical durability.

Brief Description of the Drawings

[Fig. 1] Figures 1(M1) to 1(M4) are schematic drawings illustrating the respective modes of the phase-separated structure in a polymer electrolyte membrane: figure 1(M1) is an example of co-continuous pattern, figure 1 (M2) is an example of lamellar pattern, figure 1 (M3) is an example of cylinder structure, and figure 1(M4) is an example of sea-island structure.

Best Mode for Carrying Out the Invention

The present invention is described below in detail.

The present inventors studied in detail about the polymer electrolyte membrane in terms of the above problems to achieve excellent proton conductivity even under low-humidification and low-temperature conditions, and achieve excellent mechanical strength and fuel-barrier property, and when used as the polymer electrolyte fuel cell, can achieve high output, high energy density, and long term durability, and found that specifically the proton conductivity of the

polymer electrolyte membrane strongly depends on the phase-separated structure, or on the higher structure and shape of the block copolymer containing the segment (A1) containing an ionic group and the segment (A2) not containing an ionic group, and further found that the mechanical strength, the fuel-barrier property, and the long term durability performance strongly depend on the stability of polymer higher structure, or on the polymer packing property, the crystallinity, and the crystalline/amorphous state.

In other words, the above problems can be perfectly solved in the case where the polymer electrolyte membrane comprises a block copolymer containing each one or more of: the segment (A1) containing an ionic group; and the segment (A2) not containing an ionic group, wherein the polymer electrolyte membrane forms a co-continuous or lamellar phase-separated structure, and gives a crystallization heat quantity of 0.1 J/g or larger determined by the differential scanning calorimetry, or a degree of crystallinity of 0.5% or larger determined by the wide-angle X-ray diffractometry, or in the case where the polymer electrolyte membrane comprises a block copolymer containing each one or more of: the segment (A1) containing an ionic group; and the segment (A2) not containing an ionic group, wherein the polymer electrolyte membrane forms a co-continuous or lamellar phase-separated structure, and the segment (A2) not containing an ionic group comprises a repeating unit represented by the general formula (Q1),

[Chemical formula 2]

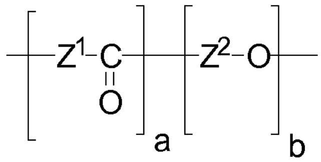

(Q1)

where, in the general formula (Q1), $Z^1$ and $Z^2$ are each a divalent organic group containing an aromatic ring, and each can be two or more kinds of groups, and do not contain an ionic group; and a and b are each independently a positive integer.

In the present invention, the term "block copolymer" means a block copolymer including two or more kinds of segment. The term "segment" referred to herein means a partial structure in the block copolymer, including a repeating unit of a single kind or of a plurality of kinds thereof, having a molecular weight of 2,000 or larger.

The polymer electrolyte membrane according to the present invention includes a block copolymer containing the segment (A1) containing an ionic group and the segment (A2) not containing an ionic group. The description of "segment not containing an ionic group" referred to herein means that the segment (A2) can contain a small quantity of ionic group within a range of not affecting reversely the effect of the present invention. Hereinafter the term "not containing an ionic group" is used in a similar meaning as above, in some cases.

The polymer electrolyte membrane according to the present invention is characterized in that the phase-separated structure is in co-continuous pattern or in lamellar pattern. The phase-separated structure can be, however, obtained in a polymer formed from two kinds or more of immiscible segments, such as a polymer including a block copolymer containing the segment (A1) containing an ionic group and the segment (A2) not containing an ionic group, and the structure modes are largely grouped into four: co-continuous (M1); lamellar (M2); cylinder (M3); and sea-island (M4), (Fig. 1).

In Figs. 1 (M1) to (M4), the light colored continuous phase is formed by a segment selected from the segment (A1) containing an ionic group and the segment (A2) not containing an ionic group, and the dense colored continuous phase or dispersed phase is formed by another segment. Specifically, in the phase-separated structure including the co-continuous (M1) and the lamellar (M2), both the segment (A1) containing an ionic group and the segment (A2) not containing an ionic group form the continuous phase.

That type of phase-separated structure is described in, for example, Annual Review of Physical Chemistry, 41, 1990, p.525. By controlling the higher structure and shape of the segment (A1) containing an ionic group and the segment (A2) not containing an ionic group, the excellent proton conductivity can be achieved even under low-humidification and low temperature conditions. Specifically for a structure including (M1) and (M2) illustrated in Fig. 1, or the co-continuous pattern (M1) and the lamellar pattern (M2), the continuous proton conduction channel is formed, and at the same time, there can be attained a polymer electrolyte membrane that exhibits not only excellent proton conductivity but also excellent fuel-barrier property, resistance to solvent, mechanical strength, and physical durability owing to the crystallinity of the domain constituted by the segment (A2) not containing an ionic group. Among these phase-separated structures, specifically preferred one is that of co-continuous pattern (M1).

On the other hand, even in the case of the phase-separated structures of (M3) and (M4) illustrated in Fig. 1, or the cylinder structure (M3) and the sea-island structure (M3), the continuous proton conduction channel can presumably be formed. Both structures, however, have been revealed to be formed only in the case where the quantity of the segment (A1) containing an ionic group is relatively small than the quantity of the segment (A2) not containing an ionic group, or

in the case where the quantity of the segment (A2) not containing an ionic group is relatively small than the quantity of the segment (A1) containing an ionic group, specifically for a diblock copolymer constituted by connecting each one of two different kinds of segments. For the former case, the absolute quantity of the ionic group contributing to the proton conduction decreases, particularly in a sea-island structure, the proton conductivity becomes poor owing to fail in forming the continuous proton conduction channel. For the latter case, although the proton conductivity is excellent, the fuel-barrier property, the resistance to solvent, the mechanical strength, and the physical durability deteriorate owing to insufficient quantity of crystalline nonionic domain. Both cases cannot attain satisfactory effect of the present invention.

The term "domain" referred to herein means a lump formed by aggregation of similar segments in a single polymer chain or a plurality of polymer chains.

In the present invention, the phrase "to have the phase-separated structure of co-continuous (M1) pattern or lamellar pattern (M2)" is defined as "to have the structure when the desired image is observed by the following described method". As the method, for a 3-dimensional image obtained by the observation of TEM tomography, three digital slice images prepared by cutting in three directions, (longitudinal, lateral, and vertical) are compared with each other. For example, in the polymer electrolyte membrane comprising the block copolymer containing each one or more of the segment (A1) containing an ionic group and the segment (A2) not containing an ionic group, when the phase-separated structure is the co-continuous pattern (M1) or the lamellar pattern (M2), all the three images form continuous phase both for the hydrophilic domain containing (A1) and the hydrophobic domain containing (A2).

On the other hand, if the structure is cylinder structure (M3) and sea-island structure (M4), these structures can be differentiated from the former case because any of these domains does not form the continuous phase in at least one image, and the structure can be identified from the pattern given by each of the three-face images. In detail, for the co-continuous structure, the pattern gives complicated one of each continuous phase; however, for the lamellar structure, the pattern gives layered one. The term "continuous phase" referred to herein means the phase in which individual domains join together, not isolating from each other, in macroscopic view. However, there can exist a not-joining portion in a part.

Specifically, to clarify the cohesion state and the contrast of the segment (A1) containing an ionic group and the segment (A2) not containing an ionic group, the polymer electrolyte membrane is immersed in a 2% by weight of lead acetate aqueous solution for 2 days to conduct ion-exchange of the ionic group with lead, which is then observed by transmission electron microscope (TEM) and TEM tomography.

Since the polymer electrolyte membrane according to the present invention requires to have crystallinity, the crystallinity has to be identified in differential scanning calorimetry (DSC) or wide-angle X-ray diffractometry. That is, a mode of the polymer electrolyte membrane according to the present invention is the polymer electrolyte membrane giving a crystallization heat quantity of 0.1 J/g or larger determined by the differential scanning calorimetry, (hereinafter referred also to as the "Aspect A"). Another mode is the polymer electrolyte membrane giving a degree of crystallinity of 0.5% or larger determined by the wide-angle X-ray diffractometry, (hereinafter referred also to as the "Aspect B"). In the present invention, although both the Aspect A and the Aspect B are preferred ones, the Aspect A is more preferable from the viewpoint of high toughness and durability.

The term "having crystallinity" in the present invention means that the polymer can be crystallized when heated, has a crystalline property, or has already been crystallized. In addition, the term "amorphous polymer" means a polymer which is not a crystalline polymer and which does not substantially progress the crystallization. Accordingly, when a crystalline polymer would not sufficiently progress the crystallization, the polymer is in an amorphous state, in some cases.

First, the Aspect A of the polymer electrolyte membrane according to the present invention will be described below. The Aspect A of the polymer electrolyte membrane of the present invention is required to have a crystallization heat quantity $\Delta H$ per unit weight (g) of the dry polymer, determined by the differential scanning calorimetry (DSC), of 0.1 J/g or larger. As the differential scanning calorimetry (DSC), the temperature-modulated DSC is preferably used from the viewpoint of measurement accuracy. From the viewpoint of mechanical strength, long term durability, and fuel-barrier property, $\Delta H$ is more preferably 2 J/g or larger. Above all, $\Delta H$ is further preferably 5 J/g or larger, more further preferably 10 J/g or larger, and most preferably 15 J/g or larger. Although the upper limit of the $\Delta H$ is not specifically limited, 500 J/g or smaller value is practical level.

The method of determining the crystallinity by using the differential scanning calorimetry (DSC) will be described below. When a polymer is subjected to crystallization, melting, thermal decomposition, the chemical structure and the higher structure (crystalline or amorphous state) of the polymer vary, and thus the crystallization heat quantity $\Delta H$ of the polymer electrolyte membrane according to the present invention is evaluated by the differential scanning calorimetry as the area of crystallization peak determined when generating crystal at the time of first temperature rise. That is, the Aspect A of the polymer electrolyte membrane according to the present invention is required to show the crystallization peak in the differential scanning calorimetry at the time of first temperature rise, and is required to have a crystallization heat quantity $\Delta H$ of 0.1 J/g or larger.

In the case where the polymer is thermally decomposed, the thermal decomposition temperature of the polymer is observed in advance by the simultaneous determination of the integrated thermo gravimetry and differential thermal

analysis (TG-DTA), and then the presence or absence of the crystallization peak is confirmed in the course of temperature rise up to a temperature not more than the thermal decomposition temperature. If the crystallization peak is observed at the thermal decomposition temperature or higher, the chemical structure of the polymer might be varied, and thus it cannot be determined that the polymer has crystallinity.

The polymer electrolyte membrane which exhibits the crystallization peak in the differential scanning calorimetry at the first cycle of temperature rise means that the polymer electrolyte membrane has crystallinity. The polymer electrolyte membrane formed of an amorphous polymer does not exhibit crystallization peak in the differential scanning calorimetry. A suitable example of that type of polymer electrolyte membrane is the Aspect A having an amorphous portion where the crystallization proceeds by temperature rise. The presence of the amorphous portion which forms crystal and progresses crystallization by temperature rise makes it possible to provide excellent proton conductivity and fuel barrier property, and also to achieve excellent resistance to solvent, mechanical strength, and physical durability, in some cases.

The confirmation of the presence or absence of the crystallization peak and the determination of the crystallization heat quantity of the block copolymer containing an ionic group by the temperature-modulated DSC is conducted by the method described in the examples. The temperature of thermal decomposition is preferably confirmed separately by TG-DTA.

The crystallization peak at the time of the temperature rise of polymer appears in an irreversible process, and the temperature of the peak is observed between the glass transition point and the melting point of the polymer. The crystallization heat quantity can be calculated from the area of the crystallization peak. Since, however, a polymer electrolyte membrane containing sulfonic acid group has the crystallization point close to the thermal decomposition point or the melting point so that the high temperature side of the crystallization peak is likely affected by the decomposition and melting. Accordingly, in the present invention, the crystallization heat quantity is defined as the double of the heat quantity from the lower temperature side to the peak top.

Next, there will be described the Aspect B of the polymer electrolyte membrane according to the present invention. The Aspect B of the polymer electrolyte membrane of the present invention is required to have a degree of crystallinity of 0.5% or larger, determined by the wide-angle X-ray diffractometry. The degree of crystallization of the polymer electrolyte membrane according to the present invention can be evaluated by the degree of crystallinity determined by the wide-angle X-ray diffractometry, and above all, from the viewpoint of dimensional stability, mechanical strength and long-term durability, the degree of crystallinity is preferably 3% or larger, and more preferably 5% or larger. Although the upper limit of the degree of crystallinity is not specifically limited, 50% or smaller is practical value. When the degree of crystallinity is smaller than 0.5% and the crystallization heat quantity, determined by DSC, is smaller than 0.1 J/g, the polymer is amorphous, and in some cases, the polymer is instable in the structure, is insufficient in the dimensional stability, and is insufficient in toughness, thereby resulting in insufficient long-term durability, which is unfavorable.

The determination of degree of crystallinity of that type of polymer electrolyte membrane by the wide-angle X-ray diffractometry is conducted by the method described in the examples.

In the differential scanning calorimetry, when the first cycle temperature rise does not generate the crystallization peak, there are two kinds of polymer electrolyte membranes: the one in which the polymer has no crystalline property and is in amorphous state; and the one in which the polymer has already been crystallized. The polymer electrolyte membrane in which the polymer has already been crystallized is in the Aspect B of the polymer electrolyte membrane of the present invention, giving a degree of crystallinity of 0.5% or larger determined by the wide-angle X-ray diffractometry. On the other hand, the polymer electrolyte membrane constituted by an amorphous polymer has instable structure so that the membrane cannot attain sufficient dimensional stability, mechanical strength, physical durability, fuel-barrier property, and resistance to solvent, thus fails to achieve high energy capacity and long term durability on using as fuel cell.

The segment (A2) not containing an ionic group, being contained in the block copolymer structuring the polymer electrolyte membrane not falling under the scope of the present invention is the one including an aromatic polyether-based polymer containing a ketone group, or including the repeating unit represented by the general formula (Q1), not containing an ionic group.

[Chemical formula 3]

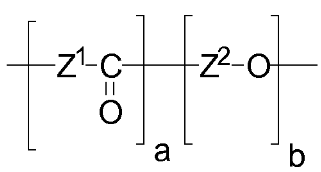

(Q1)

where, in the general formula (Q1), $Z^1$ and $Z^2$ are each a divalent organic group containing aromatic ring, each of them

may represent two or more kinds of groups, and each of them does not contain an ionic group; and a and b are each a positive integer.

The high flatness and the high polarizability of carbon-oxygen owing to the sp2 carbon in the ketone group improve the packing property between molecular chains. Accordingly, by bringing the skeleton into the block copolymer, specifically into the segment not containing an ionic group, one can attain a polymer electrolyte membrane having sufficient dimensional stability, mechanical strength, physical durability, fuel-barrier property, and resistance to solvent.

Preferred organic group as $Z^1$ and $Z^2$ in the general formula (Q1) includes the one in which $Z^1$ is phenylene group, and $Z^2$ is at least one kind selected from the general formulae (X-1), (X-2), (X-4), and (X-5). Although the organic group may be substituted by a group other than ionic group, non-substitution is more preferable from the viewpoint of addition of crystallinity. As for $Z^1$ and $Z^2$, more preferable group is phenylene group, and the most preferable one is p-phenylene group.

[Chemical formula 4]

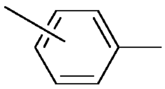
(X-1)

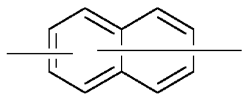
(X-4)

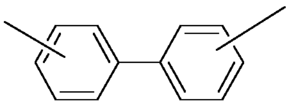
(X-2)

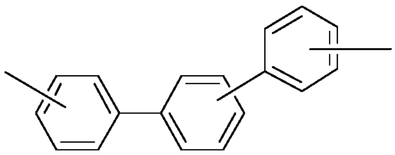
(X-5)

where, the group represented by the respective general formulae (X-1), (X-2), (X-4), and (X-5) may be substituted arbitrarily by a group other than an ionic group.

Specific examples of preferred constituent unit represented by the general formula (Q1) are the constituent units represented by the general formulae (Q2) to (Q7), but these constituent units are not the only ones, and are adequately selectable in consideration of the crystallinity and the mechanical strength. Among these, from the viewpoint of crystallinity and manufacturing cost, more preferable constituent units represented by the general formula (Q1) are those represented by the general formulae (Q2), (Q3), (Q6), and (Q7), and the most preferable ones are the general formulae (Q2) and (Q7).

[Chemical formula 5]

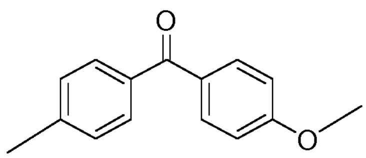

(Q2)

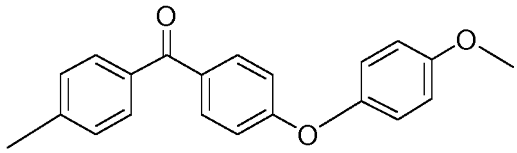

(Q3)

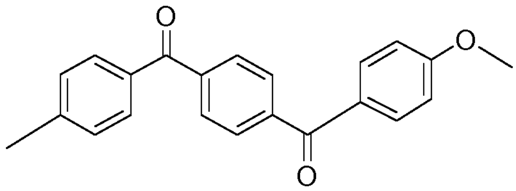

(Q4)

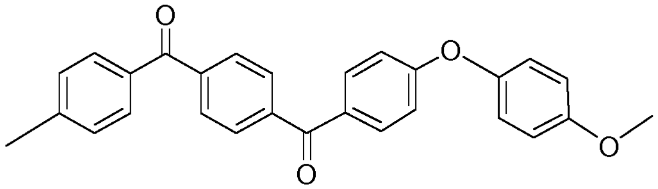

(Q5)

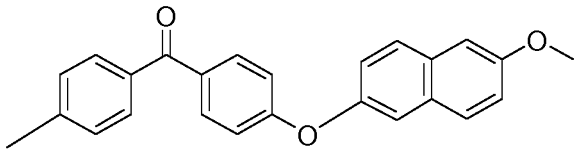

(Q6)

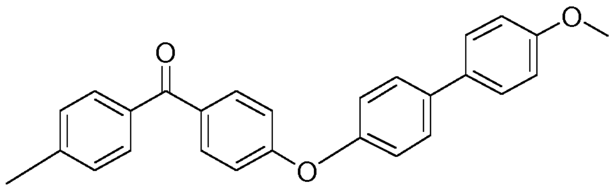

(Q7)

where, the general formulae (Q2) to (Q7) are expressed as compounds with binding position in the para-position, but compounds with binding position such as ortho-position, meta-position may be included as long as the constituent unit has crystallinity. However, para-position is more preferable from the viewpoint of crystallinity.

In the polymer electrolyte membrane containing the segment (A2) containing a ketone group and not containing an ionic group, represented by the general formula (Q1), both the Aspect A and the Aspect B are preferred aspects, and among these aspects, the Aspect A is more preferable from the viewpoint of high toughness and durability.

The cycle length of the phase-separated structure including a block copolymer containing each one or more of the segment (A1) containing an ionic group and the segment (A2) not containing an ionic group, is 100 nm or smaller as the average of the values estimated from the autocorrelation function provided by image processing on the phase-separated structure obtained from the transmission electron microscope (TEM), and is 2 nm or lager and preferably 5 nm or larger from the viewpoint of proton conductivity, mechanical strength, and physical durability. When the cycle length is outside the above range, that is, smaller than 2 nm, the phase-separated structure becomes indistinctive, and a favorable proton conduction channel has a possibility of not being formed in some cases. On the other hand, when the cycle length becomes larger than 200 nm, there is a possibility of being inferior in mechanical strength and physical durability owing to swelling, although the proton conduction channel is formed.

Observation of the phase-separated structure of the polymer electrolyte membrane by the transmission electron microscope (TEM) and the TEM tomography, the image processing thereof and the calculation of cycle length are conducted by the respective methods described in the examples.

Preferred examples of electrolyte materials being contained in the polymer electrolyte membrane, according to the present invention, on which the phase-separated structure is observed by TEM and TEM tomography include: the block copolymer containing each one or more of the segment (A1) containing an ionic group and the segment (A2) not containing an ionic group; and a polymer mixture of the block copolymer with the addition of a polymer or oligomer containing an ionic group, and/or of a polymer or oligomer not containing an ionic group. However, they are not the

limited ones, and other electrolyte materials can be used.

Among these, in the polymer electrolyte membrane, the block copolymer preferably further contains one or more of linker moiety connecting the segment (A1) with the segment (A2). The term "linker" referred to herein is defined as a moiety which connects the segment (A1) containing an ionic group with the segment (A2) not containing an ionic group, and which has a chemical structure different from that of the segment (A1) containing an ionic group and the segment (A2) not containing an ionic group. The linker can connect different segments while suppressing randomizing, segment cutting, and side reactions in the ether-exchange reaction, and thus the linker becomes necessary in synthesizing a block copolymer having a controlled structure, and further developing a controlled micro-phase-separated structure. When the linker is absent, segment cutting such as randomizing may occur, and thus the effect of the present invention cannot be obtained sufficiently in some cases.

In a block copolymer in which two or more kinds of segments insoluble to each other, that is, a hydrophilic segment containing an ionic group and a hydrophobic segment not containing an ionic group, are joined together by the linker moiety and thus a single polymer chain is formed, the short-range interaction generated from repellence between chemically-different segment chains causes phase separation to nano- or micro-domains constituted by the respective segment chains. Furthermore, the long-range interaction generated from covalent bond of segment chains with each other allows the individual domains to be arranged in specific order. By controlling the higher structure, or the nano- or micro-phase-separated structure, created by the gathering of domains formed of individual segments, an object of the present invention is to obtain the polymer electrolyte membrane having excellent fuel-barrier property, mechanical strength, physical durability, and ion conductivity, specifically excellent proton conductivity under low-humidification conditions.

The polymer electrolyte membrane according to the present invention can control various characteristics such as processability, domain size, crystallinity/amorphous property, mechanical strength, fuel-barrier property, proton conductivity, dimensional stability, by adequately selecting chemical structure, segment chain length, molecular weight, ion-exchange capacity, of the block copolymer.

When, however, the conventional aromatic polyethersulfone block copolymer or aromatic polyetherketone block copolymer is used in the polymer electrolyte membrane, there arise problems in which, when the content of the ionic group in the block copolymer is increased in order to improve the proton conductivity under low-humidification conditions and low temperature conditions, the membrane vigorously swells owing to the cohesion of ionic groups, and thus exhibits poor stability of higher polymer structure owing to low cohesion force of the polymer molecular chains, thus resulting in insufficient dimensional stability, mechanical strength, and physical durability of the membrane.

In addition, in a block copolymer containing an ionic group, which forms domains by cohesion of similar blocks, the presence of crystalline block leads to poor processability, which fails to be used for the polymer electrolyte membrane.

In contrast to this, by the control of amorphous/crystalline property through the introduction of protective group and the deprotection, and by imparting crystalline property to the block copolymer containing an ionic group, the polymer electrolyte membrane according to the present invention can achieve excellent dimensional stability, fuel-barrier property, mechanical strength, and physical durability while enhancing stability of higher structure of the segment owing to pseudo-crosslinking effect, and having excellent proton conductivity under low-humidification conditions and low-temperature conditions.

That is, the domain containing the segment (A1) containing an ionic group functions as increasing the proton conductivity by forming the proton conduction channel, and the domain containing the segment (A2) not containing an ionic group functions as increasing dimensional stability, fuel-barrier property, mechanical strength, and long-term durability owing to pseudo-crosslinking effect of strong crystallinity. Namely, the present invention performs function-separation by blocking the moieties having different functions of ion conductivity and crystallinity, and by forming phase-separated structure, thus simultaneously achieving both power generation performance and durability.

Furthermore, as to the function-separation, it is essential to obtain the block copolymer with controlled structure, and the use of the above-described linker capable of suppressing randomization, segment-cutting, and side reactions, by ether-exchange.

Hereinafter, the block copolymer containing an ionic group, used in the polymer electrolyte membrane according to the present invention, will be described referring to the preferred examples.

From the viewpoint of crystallinity and mechanical strength, the block copolymer containing an ionic group, to be used in the present invention, is preferably a hydrocarbon-based polymer. The term "hydrocarbon-based polymer containing an ionic group" referred to herein means a polymer containing an ionic group, other than perfluoro-based polymer.

The term "perfluoro-based polymer" referred to herein also means the one in which most of or all of hydrogen atoms in the alkyl group and/or alkylene group in the polymer are substituted with fluorine atoms. In the present specification, the polymer in which 85% or more of hydrogen atoms in alkyl group and/or alkylene group in the polymer are substituted with fluorine atoms is defined as the "perfluoro-based polymer".

In the present specification, typical examples of the perfluoro-based polymer containing an ionic group include

commercially available Nafion (registered trade name, manufactured by DuPont), Flemion (registered trade name, manufactured by Asahi Glass, Co.) and Aciplex (registered trade name, manufactured by Asahi Kasei Corporation). The structure of the perfluoro-based polymers containing an ionic group can be expressed by the general formula (N1).

[Chemical formula 6]

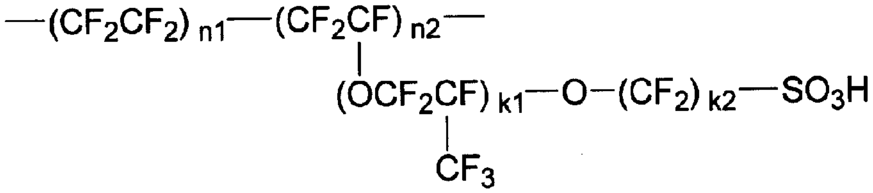

(N1)

where, in the formula (N1), n1 and n2 are each independently a natural number, and k1 and k2 are each independently an integer from 0 to 5.

In these perfluoro-based polymers containing an ionic group, the hydrophilic portion and the hydrophobic portion in the polymer form distinctive phase structure, respectively, and thus a water channel referred to as the "cluster" is formed in the polymer in water-containing state. Within the water channel, fuel such as methanol is caused to readily migrate, thus the reduction in the fuel crossover cannot be expected. In addition, crystallinity is not confirmed because of the bulky side-chains, which is unfavorable.

From the viewpoint of mechanical strength, physical durability, chemical stability, the block copolymer containing an ionic group used in the present invention is more preferably a polymer having an aromatic ring in the main chain, among the hydrocarbon-based polymers. That is, the polymer has an aromatic ring in the main chain, and has an ionic group. Although the structure of main chain is not specifically limited if only the main chain has an aromatic ring, preferred ones are those having sufficient mechanical strength and physical durability to be used as engineering plastics.

Specific examples of the polymer having aromatic ring in the main chain, used for the block copolymer containing an ionic group are polymers containing at least one constitution component of polysulfone, polyethersulfone, polyphenylene oxide, polyarylene ether-based polymer, polyphenylenesulfide, polyphenylenesulfidesulfone, polyparaphenylene, polyarylene-based polymer, polyarylene ketone, polyether ketone, polyarylenephosphine oxide, polyetherphosphine oxide, polybenzo oxazole, polybenzo thiazole, polybenzo imidazole, polyamide, polyimide, polyether imide, polyimide sulfone.

The polysulfone, polyethersulfone, polyether ketone, referred to herein are general names of polymers which have sulfone bond, ether bond, or ketone bond in the molecular chain, and include polyether ketone ketone, polyetherether ketone, polyetherether ketone ketone, polyetherketone ether ketone ketone, and polyetherketone sulfone, and not limiting specific polymer structures.

Among the above polymers having aromatic ring in the main chain, more preferred ones are polymers such as polysulfone, polyethersulfone, polyphenylene oxide, polyarylene ether-based polymer, polyphenylenesulfide, polyphenylenesulfide sulfone, polyarylene ketone, polyether ketone, polyarylenephosphine oxide, and polyetherphosphine oxide, from the viewpoint of mechanical strength, physical durability, processability, and hydrolysis resistance.

A specific example is the polymer having aromatic ring in the main chain, having a repeating unit represented by the general formula (T1).

[Chemical formula 7]

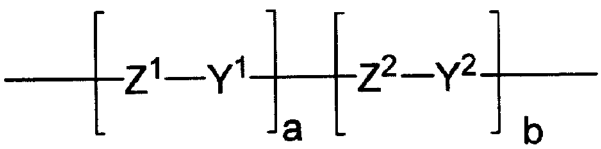

(T1)

where, $Z^1$ and $Z^2$ are each an organic group containing an aromatic ring, and each can represent two or more kinds of groups; at least one of $Z^1$ and $Z^2$ contains ionic group at least a part thereof; $Y^1$ is an electron-withdrawing group; $Y^2$ is O or S; and a and b are each independently 0 or a positive integer, however a and b are not 0 at the same time.

Among the polymers having aromatic ring in the main chain, and having repeating unit represented by the

general formula (T1), preferable ones are the polymers containing repeating unit represented by the general formulae (T1-1) to (T1-6) from the viewpoint of hydrolysis resistance, mechanical strength, physical durability, and manufacturing cost. Among these, from the viewpoint of mechanical strength, physical durability, and manufacturing cost, further preferred one is the aromatic polyether-based polymer having O as $Y^2$, and most preferred one is the aromatic polyether-ketone-based polymer having repeating unit represented by the general formula (T1-3), or the one in which $Y^1$ is -CO- group, $Y^2$ is O, and a and b are each independently a positive integer.

[Chemical formula 8]

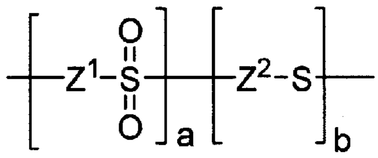
(T1-1)

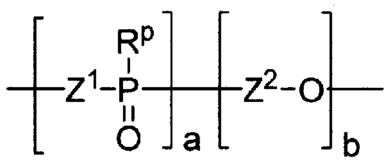
(T1-4)

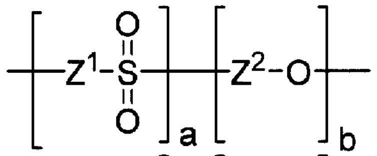
(T1-2)

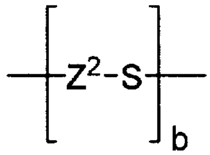
(T1-5)

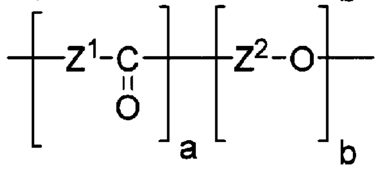
(T1-3)

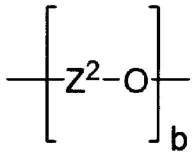
(T1-6)

where, $Z^1$ and $Z^2$ are each an organic group containing aromatic ring, and each of them can represent two or more kinds of groups; at least one of $Z^1$ and $Z^2$ contains ionic group at least a part thereof; a and b are each independently 0 or a positive integer, however a and b are not 0 at the same time; and $R^p$ is an organic group.

Preferred organic group as $Z^1$ and $Z^2$ includes phenylene group, naphthylene group, and biphenylene group. These groups include the one containing an ionic group. Although they can be substituted by a group other than ionic group, non-substitution is more preferable from the viewpoint of providing crystallinity. Further preferred ones are phenylene group and phenylene group containing an ionic group, and most preferred ones are p-phenylene group and p-phenylene group containing an ionic group.

Examples of preferred organic group represented by $R^p$ in the general formula (T1-4) are methyl group, ethyl group, propyl group, isopropyl group, cyclopentyl group, cyclohexyl group, norbornyl group, vinyl group, allyl group, benzyl group, phenyl group, naphthyl group, and phenylphenyl group. Most preferable $R^p$ is phenyl group from the viewpoint of industrial availability.

In the present specification, the aromatic polyether-based polymer means a polymer mainly constituted by aromatic ring, containing ether bond as a form of joining the aromatic ring units. Other than the ether bond, there can exist direct bonding and bonding forms which are commonly used for the formation of aromatic-based polymers, such as ketone, sulfone, sulfide, various kinds of alkylene, imide, amide, ester, and urethane. The ether bond preferably exists at least one per single repeating unit in the main constitution component. The aromatic ring may contain not only a hydrocarbon-based aromatic ring, but also a hetero ring. In addition, together with the aromatic ring unit, the polymer can be constituted by an aliphatic-based unit in a part. The aromatic unit can contain an arbitrary substituent such as: hydrocarbon-based group including alkyl group, alkoxy group, aromatic group, and allyloxy group; halogen group; nitro group; cyano group; amino group; halogenated alkyl group; carboxyl group; phosphonic acid group; and hydroxyl group.

The aromatic polyether ketone-based polymer is the general name of polymers having at least ether bond and ketone bond in the molecular chain. The aromatic polyether ketone-based polymer includes polyether ketone, polyether ketone ketone, polyetherether ketone, polyetherether ketone ketone, polyether ketone ether ketone ketone, polyether ketone sulfone, polyether ketone phosphine oxide, and polyether ketone nitrile, and is not limited to a specific polymer structure. There are cases where the one containing a large quantity of phosphine oxide and nitrile gives insufficient solubility to solvent, in a polymer containing an ionic group and having a protective group, and where, when the one containing a large quantity of sulfone, there result insufficient crystallinity and solvent resistance such as hot methanol resistance or hot water resistance.

Next, there will be given the description of the segment (A1) and the segment (A2) used in the polymer electrolyte membrane according to the present invention.

From the viewpoint of chemical stability, hot water resistance, and physical durability, the segment (A1) and the segment (A2) used in the polymer electrolyte membrane are preferably hydrocarbon-based segments, more preferably aromatic-based segments having aromatic ring in the main chain, and specifically preferably aromatic polyether ketone-based segments. Specific examples of these segments include, as the aromatic group, the one containing hydrocarbon-based arylene group such as phenylene group, naphthylene group, biphenylene group, and fluorine diyl group, and heteroarylene group such as pyridine diyl, quinoxaline diyl, and thiophene diyl, but the examples are not limited thereto.

In the polymer electrolyte membrane according to the present invention, the segment (A2) not containing an ionic group contains a constituent unit represented by the general formula (S2),

[Chemical formula 9]

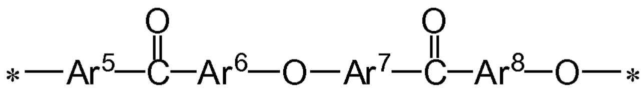 (S2)

where, in the general formula (S2), Arts to $Ar^8$ are each an arbitrary divalent arylene group, which can each be arbitrarily substituted, and which do not contain ionic group; Arts to $Ar^8$ can independently comprise two or more kinds of arylene group; and the symbol * signifies a bond moiety with the general formula (S2) or with other constituent unit.

Furthermore, the segment (A1) containing an ionic group contains the constituent unit represented by the general formula (S1).

[Chemical formula 10]

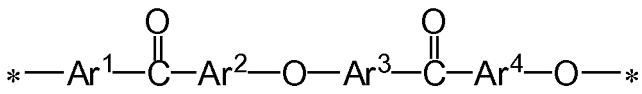 (S1)

where, in the general formula (S1), $Ar^1$ to $Ar^4$ are each an arbitrary divalent arylene group; $Ar^1$ and/or $Ar^2$ contains an ionic group; $Ar^3$ and $Ar^4$ can contain or not contain an ionic group; $Ar^1$ to $Ar^4$ can each be arbitrarily substituted, and can independently comprise two or more kinds of arylene group; and the symbol * signifies a bond moiety with the general formula (S1) or with other constituent unit.

Examples of preferred divalent arylene group as $Ar^1$ to $Ar^8$ are: hydrocarbon-based arylene group such as phenylene group, naphthylene group, biphenylene group, and fluorene diyl group; and heteroarylene group such as pyridine diyl, quinoxaline diyl, and thiophene diyl. They are, however, not limited thereto. The $Ar^1$ and/or $Ar^2$ contains ionic group. The $Ar^3$ and $Ar^4$ contain or do not contain ionic group. $Ar^1$ to $Ar^4$ can be substituted with a group other than ionic group; however, not-substitution is more preferable from the viewpoint of proton conductivity, chemical stability, and physical durability; further preferably they are phenylene group and phenylene group containing an ionic group, and most preferably they are p-phenylene group and p-phenylene group containing an ionic group.

The ionic group used in the block copolymer of the present invention is a sulfonic acid group. The sulfonic acid group is the group represented by the general formula (f1), a sulfone imide group is a group represented by the general formula (f2), (in the general formula (f2), R is an arbitrary organic group), a sulfuric acid group is a group represented by the general formula (f3), a phosphonic acid group is a group represented by the general formula (f4), a phosphoric acid group is a group represented by the general formula (f5) or (f6), and a carboxylic acid group is the group represented by the general formula (f7).

[Chemical formula 11]

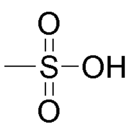 (f1)

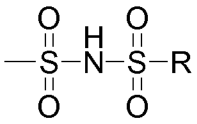 (f2)

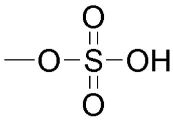 (f3)

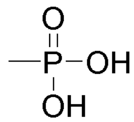 (f4)

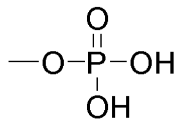 (f5)

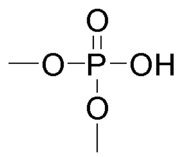 (f6)

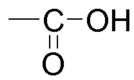 (f7)

These ionic groups include the ones in which the functional groups (f1) to (f7) become the respective salts. The cations forming these salts can include arbitrary metal cation and $NR_4^+$ (R is an arbitrary organic group). The metal cation can be used without limiting the number of valence. Specific examples of preferable metal cation are Li, Na, K, Rh, Mg, Ca, Sr, Ti, Al, Fe, Pt, Rh, Ru, Ir, and Pd. Among these, Na, K, and Li which are inexpensive and easily capable of proton-substitution are preferable for the block copolymer according to the present invention.

The polymer electrolyte material can contain two or more kinds of these ionic groups, and the combination thereof is adequately determined by the polymer structure. Among these groups, at least sulfonic acid group, sulfone imide group, and sulfuric acid group are preferably contained from the viewpoint of high proton conductivity, and at least sulfonic acid group is most preferably contained from the viewpoint of raw material cost.

The block copolymer according to the present invention containing sulfonic acid group, has an ion-exchange capacity of 1.4 meq/g or larger, and preferably 2 meq/g or larger. The ion-exchange capacity of the block copolymer is preferably 3.5 meq/g or smaller, and most preferably 3 meq/g or smaller. When the ion-exchange capacity is smaller than 0.1 meq/g, the proton conductivity becomes insufficient in some cases. When the ion-exchange capacity is larger than 5 meq/g, the water resistance becomes insufficient in some cases.

According to the block copolymer of the present invention, the molar composition ratio of the segment (A1) containing an ionic group to the segment (A2) not containing an ionic group, (A1/A2), is preferably 0.15 or larger from the viewpoint of proton conductivity under low-humidification conditions and durability, more preferably 0.33 or larger, and most preferably 0.5 or larger. The molar composition ratio (A1/A2) is preferably 5 or smaller, more preferably 3 or smaller, and most preferably 2.5 or smaller. If the molar composition ratio A1/A2 is smaller than 0.15 or larger than 5, the effect of the present invention becomes insufficient, in some cases, and further if lamellar or co-continuous phase-separated structure is not formed, or if the proton conductivity under low-humidification conditions becomes insufficient, the hot water resistance and the physical durability become insufficient, in some cases, which are unfavorable.

The term "molar composition ratio (A1/A2)" referred to herein means the ratio of mole number of the repeating unit in the segment (A1) to the mole number of the repeating unit in the segment (A2). For example, when the segment (A1) is constituted by the constituent unit (S1) containing an ionic group, and the segment (A2) is constituted by the constituent unit (S2) not containing an ionic group, the ratio means the ratio derived from the number-average molecular weight of each segment divided by the molecular weight of the respective constituent units (S1) and (S2), though the example is not limited thereto.

In the block copolymer structuring the polymer electrolyte membrane according to the present invention, the quantity of the segment (A1) containing an ionic group and the segment (A2) not containing an ionic group, respectively, is preferably one or more of each from the viewpoint of forming the phase-separated structure, and more preferably three or more segments by the sum of (A1) and (A2) from the viewpoint of forming the phase-separated structure in co-continuous or lamellar pattern at further wide range of molar composition ratio A1/A2. If the total number thereof is smaller than three, sea-island structure or cylinder structure appears, which results in insufficient power generation performance under low-humidification conditions, hot water resistance, and physical durability, thus failing to attain sufficient effect of the present invention, in some cases.

From the viewpoint of proton conductivity under low-humidification conditions, the ion-exchange capacity of the segment (A1) containing an ionic group has preferably high values, more preferably 2.5 meq/g or larger, further preferably 3 meq/g or larger, and most preferably 3.5 meq/g or larger. The ion-exchange capacity thereof is preferably 6.5 meq/g or smaller, more preferably 5 meq/g or smaller, and most preferably 4.5 meq/g or smaller. If the ion-exchange capacity of the segment (A1) containing an ionic group is smaller than 2.5 meq/g, the proton conductivity under low-humidification conditions becomes insufficient, in some cases, and if the ion-exchange capacity thereof exceeds 6.5 meq/g, the hot water resistance and the physical durability become insufficient, in some cases, both of which cases are unfavorable.

Lower ion-exchange capacity of the segment (A2) not containing an ionic group is more preferable from the viewpoint of hot water resistance, mechanical strength, dimensional stability, and physical durability, further preferably 1 meq/g or smaller, further preferably 0.5 meq/g or smaller, and most preferably 0.1 meq/g or smaller. If the ion-exchange capacity of the segment (A2) not containing an ionic group exceeds 1 meq/g, hot water resistance, mechanical strength, dimensional stability, and physical durability become insufficient, in some cases, which is unfavorable.

The term "ion-exchange capacity" referred to herein means the molar amount of introduced sulfonic acid group per unit dry weight of the block copolymer, the polymer electrolyte material, and the polymer electrolyte membrane, respectively. Higher ion-exchange capacity means higher degree of sulfonation. The ion-exchange capacity can be determined by elemental analysis, neutralization titration. Although the ion-exchange capacity can be determined from S/C ratio in the elemental analysis, the determination becomes difficult when sulfur source other than the sulfonic acid group exists. Therefore, in the present invention, the ion-exchange capacity is defined as the value derived by the neutralization titration. As described later, the polymer electrolyte material and the polymer electrolyte membrane according to the present invention include the mode of composite constituted by the block copolymer of the present invention and other component. In that case, however, the ion-exchange capacity is determined on the basis of the entire amount of the composite.

Examples of neutralization titration are given below. The measurements are given for three times, and the average of them is adopted.

(1) An electrolyte membrane is substituted by proton, followed by fully rinsing with pure water. After wiping off the water on the surface of the electrolyte membrane, the membrane is dried in a vacuum at 100°C for 12 hours or more. Then the dry weight is determined.
(2) To an electrolyte, 50 mL of 5% by weight of aqueous solution of sodium sulfate is added, and the electrolyte is allowed to stand for 12 hours to conduct ion-exchange.
(3) Using a 0.01 mol/L of sodium hydroxide aqueous solution, the generated sulfuric acid is titrated. As the indicator, commercially available 0.1 w/v% phenolphthalein solution for titration is added. The end point is determined on changing to light purplish red.
(4) The ion-exchange capacity is derived by the formula,

Ion-exchange capacity (meq/g) = [Concentration of aqueous solution of sodium hydroxide (mmol/mL) x (Titrated amount (mL))]/[Dry weight of sample (g)]

Applicable method of introducing ionic group for obtaining the block copolymer according to the present invention includes: a method of performing polymerization by using a monomer containing an ionic group; and a method of introducing an ionic group in a polymer reaction.

As the method of performing polymerization by using a monomer containing an ionic group, a monomer containing an ionic group in the repeating units may be used. Such method is, for example, disclosed in Journal of Membrane Science, 197, 2002, p.231-242. The method is easy in controlling the ion-exchange capacity of polymer and is easy in application in industry, and thus the method is specifically preferred.

The method of introducing an ionic group by polymer reaction will be described below referring to examples. Introduction of a phosphonic acid group into an aromatic polymer can be done by, for example, the method described in Polymer Preprints, Japan, 51, 2002, p.750. Introduction of a phosphoric acid group into an aromatic polymer can be done by, for example, phosphoric acid esterification of an aromatic polymer containing a hydroxyl group. Introduction of a carboxylic acid group into an aromatic polymer can be done by, for example, oxidation of an aromatic polymer containing an alkyl group or a hydroxy alkyl group. Introduction of a sulfuric acid group into an aromatic polymer can be done by, for example, sulfuric acid esterification of an aromatic polymer containing a hydroxyl group. As the method of sulfonating an aromatic polymer, or the method of introducing a sulfonic acid group, there can be used, for example, the one described in Japanese Patent Laid-Open No. 02-16126, Japanese Patent Laid-Open No. 02-208322.

Specifically, for example, sulfonation can be performed by causing an aromatic polymer to react with a sulfonation agent such as chlorosulfonic acid in a solvent such as chloroform, or by causing an aromatic polymer to react in concentrated sulfuric acid or oleum. The sulfonation agent is not specifically limited if only the agent can sulfonate the aromatic polymer, and other than the above, sulfur trioxide can be used. In the case of sulfonating an aromatic polymer by the above method, the degree of sulfonation can be controlled by the use amount of the sulfonation agent, the reaction temperature, and the reaction time. Introduction of a sulfone imide group into an aromatic polymer can be done by, for example, a method of causing an aromatic polymer to react with a sulfonic acid group and a sulfone amide group.

Next, in the block copolymer according to the present invention, the segment (A2) not containing an ionic group is preferably a constituent unit exhibiting crystallinity from the viewpoint of chemical stability and strong intermolecular cohesive force, and the segment (A2) makes it possible to obtain a block copolymer having excellent mechanical strength, dimensional stability, and physical durability.

A specific example of more preferable constituent unit represented by the general formula (S2) which is included in the segment (A2) not containing an ionic group is a constituent unit represented by the general formula (P1) from the viewpoint of availability of raw material. Among them, from the viewpoint of mechanical strength, dimensional stability, and physical durability, due to the crystallinity, the constituent unit represented by the formula (S3) is more preferred. A content of the constituent unit represented by the general formula (S2) which is included in the segment (A2) not containing an ionic group is 20 mol% or larger, preferable 50 mol% or larger, and most preferable80 mol% or larger. When the content is smaller than 20 mol%, the effect of the present invention in terms of mechanical strength, dimensional stability, and physical durability, due to crystallinity, becomes insufficient in some cases, which is not favorable.

[Chemical formula 12]

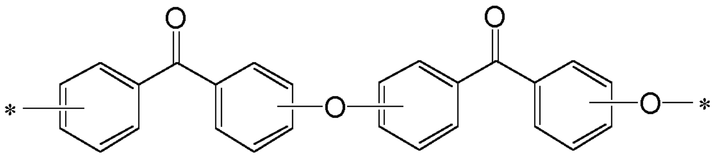
(P1)

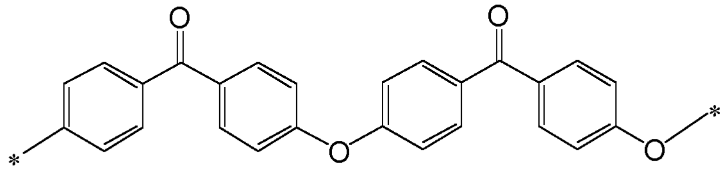
(S3)

In the segment (A2) not containing an ionic group, a preferred example of constituent unit that is copolymerized other than the constituent unit represented by the general formula (S2) includes an aromatic polyether-based polymer containing a ketone group, that is, the one having the constituent unit represented by the general formula (Q1), which does not contain an ionic group.

[Chemical formula 13]

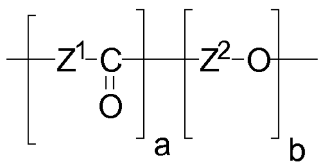
(Q1)

where, in the general formula (Q1), $Z^1$ and $Z^2$ are each a divalent organic group containing aromatic ring, each of them may represent two or more kinds of groups, and each of them does not contain an ionic group; and a and b are each a positive integer.

Preferred organic group as $Z^1$ and $Z^2$ in the general formula (Q1) includes the one in which $Z^1$ is phenylene group, and $Z^2$ is at least one kind selected from the general formulae (X-1), (X-2), (X-4), and (X-5). Although the organic group may be substituted by a group other than ionic group, non-substitution is more preferable from the viewpoint of addition of crystallinity. As for $Z^1$ and $Z^2$, more preferable group is phenylene group, and the most preferable one is p-phenylene group.

[Chemical formula 14]

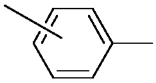

(X-1)

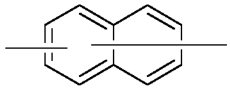

(X-4)

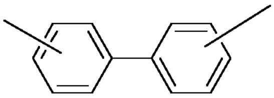

(X-2)

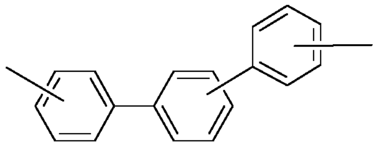

(X-5)

where, the group represented by the respective general formulae (X-1), (X-2), (X-4), and (X-5) may be substituted arbitrarily by a group other than an ionic group.

Specific examples of preferred constituent unit represented by the general formula (Q1) are the constituent units represented by the general formulae (Q2) to (Q7), but these constituent units are not the limited ones, and are adequately selectable in consideration of the crystallinity and the mechanical strength. Among these, from the viewpoint of crystallinity and manufacturing cost, more preferable constituent units represented by the general formula (Q1) are those represented by the general formulae (Q2), (Q3), (Q6), and (Q7), and the most preferable ones are the general formulae (Q2) and (Q7).

[Chemical formula 15]

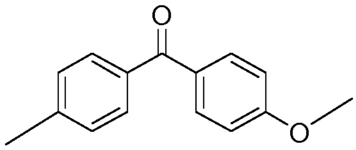
(Q2)

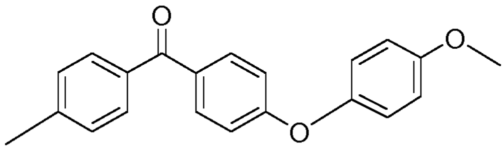
(Q3)

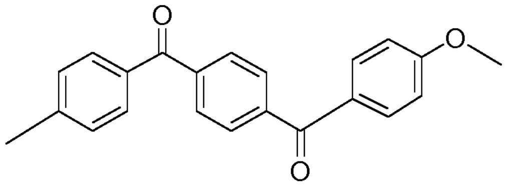
(Q4)

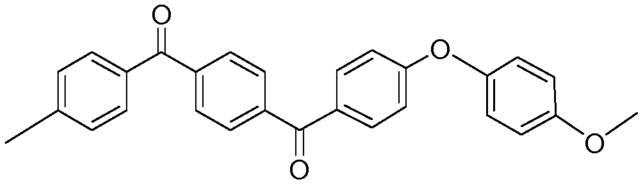
(Q5)

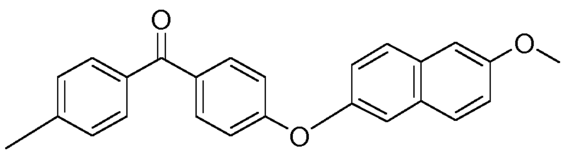
(Q6)

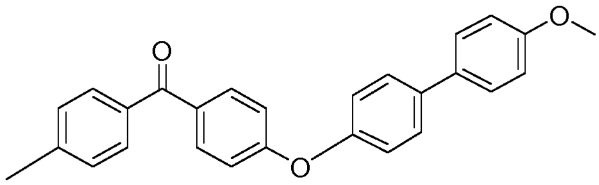
(Q7)

where, the general formulae (Q2) to (Q7) are expressed as compounds with binding positions in the para-position, but a binding position in ortho-position, meta-position may be included as long as the constituent unit has crystallinity. However, para-position is more preferable from the viewpoint of crystallinity.

In the block copolymer according to the present invention, as the segment (A1) containing an ionic group, a constituent unit is more preferable, which is chemically stable, which increases the acidity owing to the electron-withdrawing effect, and which introduces sulfonic acid group at high density. As the segment (A1), there can be obtained a block copolymer having excellent proton conductivity under low-humidification conditions.

A specific example of more preferable constituent unit represented by the general formula (S1) included in the segment (A1) containing an ionic group is the constituent unit represented by the general formula (P2) from the viewpoint of availability of raw material. Among these, from the viewpoint of availability of raw material and polymerizability, the constituent unit represented by the formula (P3) is more preferable, and the constituent unit represented by the formula (S4) is most preferable. As to the content of the constituent unit represented by the general formula (S1) included in the segment (A1) containing an ionic group, the content is 20 mol% or larger, preferable 50 mol% or largerand most preferable 80 mol% or larger. When the content is smaller than 20 mol%, the effect of the present invention on chemical stability and proton conductivity under low-humidification condition becomes insufficient in some cases, which is not favorable.

[Chemical formula 16]

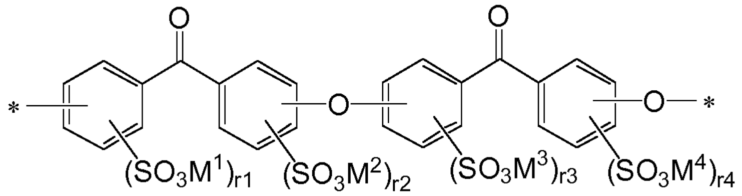

(P2)

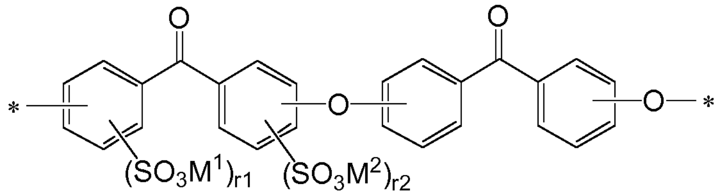

(P3)

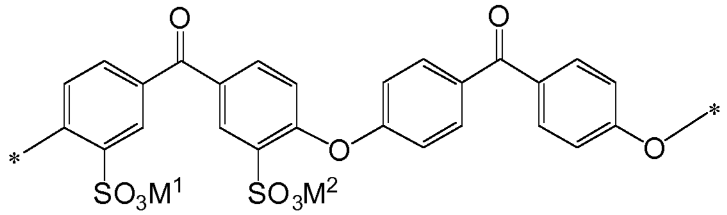

(S4)

where, in the formulae (P2), (P3), and (S4), $M^1$ to $M^4$ are each hydrogen, metal cation, and ammonium cation; $M^1$ to $M^4$ can be two or more kinds of groups; r1 to r4 are each independently 0 to 2; r1+r2 signifies 1 to 8; and r1 to r4 may each be two or more kinds of values.

A preferable example of the constituent unit that is copolymerized other than the constituent unit represented by the general formula (S1), as the segment (A1) containing an ionic group, includes an aromatic polyether-based polymer containing a ketone group and containing an ionic group.

The synthesis method for the segment (A1) containing an ionic group, used in the present invention, is not specifically limited if only substantially sufficient molecular weight is obtained. For example, the synthesis can be done through the utilization of: an aromatic nucleophilic substitution reaction of an aromatic active dihalide compound and a divalent phenol compound; or an aromatic nucleophilic substitution reaction of a halogenated aromatic phenol compound.

As an aromatic active dihalide compound used in the segment (A1) containing an ionic group, the use, as a monomer, of a compound in which an ionic acid group is introduced into an aromatic active dihalide compound is preferred from the viewpoint of chemical stability, manufacturing cost, and availability of precision control of the amount of ionic group. Preferred examples of the monomer having sulfonic acid group as the ionic group can include, 3,3'-disulfonate-4,4'-dichlorodiphenylsulfone, 3,3'-disulfonate-4,4'-difluorodiphenylsulfone, 3,3'-disulfonate-4,4'-dichlorodiphenylketone, 3,3'-disulfonate-4,4'-difluorodiphenylketone, 3,3'-disulfonate-4,4'-dichlorodiphenylphenylphosphine oxide, 3,3'-disulfonate-4,4'-difluorodiphenylphenylphosphine oxide, but these examples are not limited thereto.

From the viewpoint of proton conductivity and hydrolysis resistance, sulfonic acid group is most preferred as the ionic group, but the monomer having an ionic group used in the present invention may contain other ionic group. Among these, from the viewpoint of chemical stability and physical durability, more preferable ones are 3,3'-disulfonate-4,4'-dichlorodiphenylketone and 3,3'-disulfonate-4,4'-difluorodiphenylketone, and from the viewpoint of polymerization activity, the most preferable one is 3,3'-disulfonate-4,4'-difluorodiphenylketone.

As the monomer having an ionic group, the segment (A1) containing an ionic group synthesized using 3,3'-disulfonate-4,4'-dichlorodiphenylketone and 3,3'-disulfonate-4,4'-difluorodiphenylketone, further contains the constituent unit represented by the general formula (p1), and the segment (A1) is favorably used. The aromatic polyether-based polymer has the high crystallinity characteristics of ketone group, and is a component having superior hot water resistance to the sulfone group, thus serving as an effective component in the material excellent in dimensional stability, mechanical strength, and physical durability, under high-temperature and high-humidity conditions, thereby being further preferably used. In the polymerization, that type of sulfonic acid group preferably takes the form of a salt with monovalent cation species. The monovalent cation species may be sodium, potassium, other metal species, various kinds of amines, and they are not specifically limited. These aromatic active dihalide compounds can be used alone, and can be used with a combination of a plurality of aromatic dihalide compounds.

[Chemical formula 17]

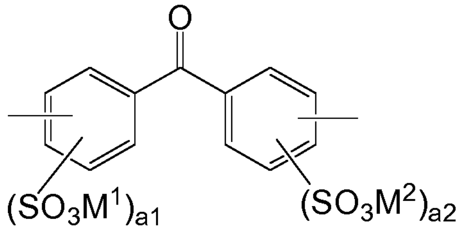

(p1)

where, in the general formula (p1), $M^1$ and $M^2$ are each hydrogen, metal cation, and ammonium cation; a1 and a2 are each an integer of 1 to 4; the constituent unit represented by the general formula (p1) may be arbitrarily substituted.

Furthermore, as to the aromatic active dihalide compound, the ionic group density can be controlled by copolymerization of the one containing an ionic group and the one not containing an ionic group. However, as to the segment (A1) containing an ionic group according to the present invention, the one not copolymerizing an aromatic active dihalide compound not containing an ionic group is more preferable from the viewpoint of securing continuity of the proton conduction pass.

Specific examples of more preferable aromatic active dihalide compound not containing an ionic group can include 4,4'-dichlorodiphenyl sulfone, 4,4'-difluorodiphenyl sulfone, 4,4'-dichlorodiphenyl ketone, 4,4'-difluorodiphenyl ketone, 4,4'-dichlorodiphenylphenylphosphine oxide, 4,4'-difluorodiphenylphenylphosphine oxide, 2,6-dichlorobenzonitrile, and 2,6-difluorobenzonitrile. Among these, 4,4'-dichlorodiphenyl ketone and 4,4'-difluorodiphenyl ketone are more preferable from the viewpoint of providing crystallinity, mechanical strength, physical durability, and hot water resistance. Above all, 4,4'-difluorodiphenyl ketone is the most preferable from the viewpoint of polymerization activity. These aromatic active dihalide compounds can be used alone, and can also be used together with a plurality of aromatic active dihalide compounds.

The polymer electrolyte materials synthesized using 4,4'-dichlorodiphenyl ketone or 4,4'-difluorodiphenyl ketone as the aromatic active dihalide compound further contain the constitution moiety represented by the general formula (p2), and are preferably used. The constituent unit serves as a component that provides intermolecular cohesive force and crystallinity, thus serving as a material excellent in dimensional stability, mechanical strength, and physical durability under high-temperature and high-humidity conditions, and the constituent unit is preferably used.

[Chemical formula 18]

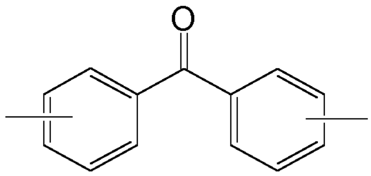

(p2)

where, the constituent unit represented by the general formula (p2) may be arbitrarily substituted, and does not contain an ionic group.

An example of the monomer not containing an ionic group, which can perform copolymerization, includes a halogenated aromatic hydroxy compound. Although the halogenated aromatic hydroxy compound is not specifically limited, there are included, as examples, 4-hydroxy-4'-chlorobenzophenone, 4-hydroxy-4'-fluorobenzophenone, 4-hydroxy-4'-chlorodiphenylsulfone, 4-hydroxy-4'-fluorodiphenylsulfone, 4-(4'-hydroxybiphenyl)(4-chlorophenyl)sulfone, 4-(4'-hydroxybiphenyl)(4-fluorophenyl)sulfone, 4-(4'-hydroxybiphenyl)(4-chlorophenyl)ketone, 4-(4'-hydroxybiphenyl)(4-fluorophenyl)ketone. They can be used alone, and can be used as a mixture of two or more thereof. Furthermore, an aromatic polyether-based compound can be synthesized by causing these halogenated aromatic hydroxy compounds to react in the reaction between an activated dihalogenated aromatic compound and an aromatic dihydroxy compound.

As preferred examples of the constituent unit that is caused to be copolymerized other than the constituent unit represented by the general formula (S1), as the segment (A1) containing an ionic group, specifically preferable are aromatic polyether ketone-based polymer that includes the constituent unit represented by the general formulae (T1) and (T2) that contain the constituent unit represented by the general formulae (p1) and (p2).

[Chemical formula 19]

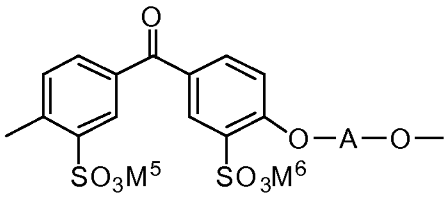
(T1)

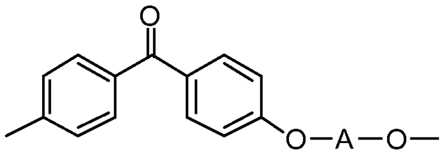
(T2)

where, in the general formulae (T1) and (T2), A is a divalent organic group containing aromatic ring; $M^5$ and $M^6$ are each hydrogen, metal cation, and ammonium cation; and A may be two or more kinds of groups.

By changing the composition ratio of the constituent units represented by the general formulae (T1) and (T2), the ion-exchange capacity can be controlled. When the quantities of constituent units represented by the general formulae (p1), (T1) and (T2) are expressed as p1, T1 and T2, respectively, the introduction quantity of p1 is, on the basis of the sum of moles of T1 and T2, preferably 75 mol% or larger, more preferably 90 mol% or larger, and most preferably 100 mol%. When the introduction quantity of p1 is smaller than 75 mol%, the formation of proton conduction pass becomes insufficient in some cases, which is not favorable.

Here, as the divalent organic group A containing aromatic ring in the general formulae (T1) and (T2), there can be used various kinds of divalent phenol compounds which can be used for polymerization of aromatic polyether-based polymer by the aromatic nucleophilic substitution reaction, but the divalent organic group A is not limited. In addition, these aromatic dihydroxy compounds to which further sulfonic acid group is introduced can be used as the monomer.

Specific examples of preferred divalent organic group A containing aromatic ring are the groups represented by the general formulae (X'-1) to (X'-6), but they are not limited.

[Chemical formula 20]

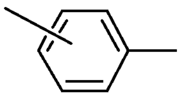
(X'-1)

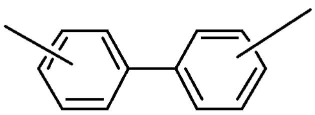
(X'-2)

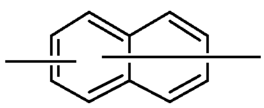
(X'-3)

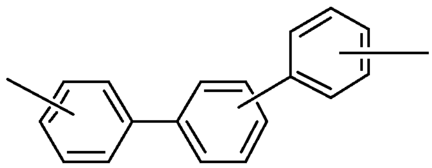
(X'-4)

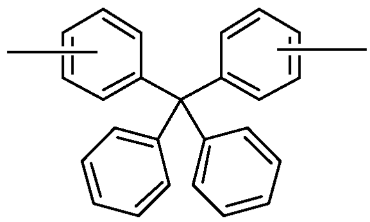
(X'-5)

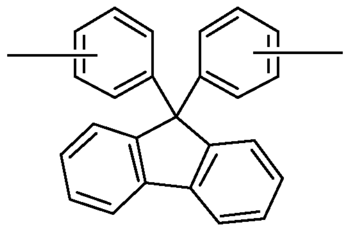
(X'-6)

where, the groups represented by the formulae (X'-1) to (X'-6) may be arbitrarily substituted.

They can contain an ionic group. The ones having aromatic ring at side chain are preferred specific examples. Two or more of them together are also used as necessary. Among these, more preferable groups are represented by the general formulae (X'-1) to (X' -4), and most preferable group is represented by the general formula (X'-2) or (X'-3) from the viewpoint of crystallinity, dimensional stability, toughness, and chemical stability.

The number-average molecular weights of the segment (A1) containing an ionic group and the segment (A2) not containing an ionic group are related to the domain size of the phase-separated structure, and from the viewpoint of balance between the physical durability and the proton conductivity under low-humidification conditions, the number-average molecular weight of the segment (A1) is 15,000 or larger and the number-average molecular weight of the segment (A2) is preferably 5, 000 or larger, more preferably 10,000 or larger, and most preferably 15,000 or larger. In addition, the number-average molecular weight of each of them is preferably 50,000 or smaller, more preferably 40,000 or smaller, and most preferably 30,000 or smaller.

The block copolymer is suitably used as the constituent unit of the polymer electrolyte membrane according to the present invention. The term "polymer electrolyte membrane" referred to herein means a mode of thinner thickness compared with the area, and includes film and film-like shape.

When the polymer electrolyte membrane according to the present invention is used for polymer electrolyte fuel cell, normally the polymer electrolyte membrane is used in a membrane shape as the polymer electrolyte membrane or as the binder of electrode catalyst layer.

The polymer electrolyte membrane according to the present invention is applicable for various uses. The polymer electrolyte membrane is applicable for medical uses such as artificial skin, filtering use, ion-exchange resin use such as anti-chlorine reverse osmosis membrane, various structuring materials, electrochemical use, humidification membrane, antifogging membrane, antistatic membrane, solar cell membrane, and gas barrier material. Among these, the membrane is more preferably used for various electrochemical uses. The electrochemical uses include fuel cell, redox flow battery, water electrolyzer, and chloroalkali electrolyzer. Among these, the fuel cell use is most preferable.

Next, the method of manufacturing the polymer electrolyte membrane according to the present invention will be described specifically.

In the conventional block copolymer including a segment containing an ionic group, a segment not containing an ionic group, and a linker moiety connecting the segments, not only the segment containing an ionic group but also the segment not containing an ionic group is formed of an amorphous polymer having solubility because of the limitation of synthesis, in which solubility to solvent is required at the time of polymerization and membrane-formation. The amorphous segment not containing an ionic group has poor cohesive force of polymer molecule chains, and thus when being formed in a membrane state, the amorphous segment has poor toughness, and cannot suppress the swelling of the segment containing an ionic group, and thus was not able to achieve satisfactory mechanical strength and physical durability. In addition, from the problem of thermal decomposition temperature of the ionic group, normally, the cast molding is used, and thus the crystalline polymer having poor solubility was not able to obtain a homogeneous and tough membrane in the cast molding.

The polymer electrolyte membrane according to the present invention includes a block copolymer having the segment (A2) not containing an ionic group containing the constituent unit represented by the general formula (S2). Since the segment (A2) not containing an ionic group is a segment exhibiting crystallinity, it can be manufactured by the processes of: molding a precursor of the block copolymer to which a protective group is introduced at least into the segment (A2) not containing an ionic group; and then deprotecting at least a part of the protective group contained in the molded product. As to the block copolymer, processability tends to deteriorate owing to the crystallization of polymer forming the domain, in comparison with the processability of the random copolymer, and thus it is preferable to introduce the protective group at least into the segment (A2) not containing an ionic group and to improve the processability. Also into the segment (A1) containing an ionic group, the protective group is preferably introduced, when the processability becomes poor.

Specific examples of the protective group used in the present invention are the ones commonly used in organic synthesis, and the protective group is a substituent which is temporarily introduced on the premise of being removed in the subsequent step, which can protect highly reactive functional group to make the group inactive in the subsequent reaction, and which can perform deprotection after the reaction, to thereby return the protected group to the original functional group. That is, the protective group forms a pair with the functional group being protected. There are cases where, for example, t-butyl group is used as the protective group of hydroxyl group, but when the same t-butyl group is introduced into the alkylene chain, the t-butyl group is not referred to as "the protective group". The reaction introducing the protective group is referred to as "the protection (reaction) ", and the reaction removing the protective group is referred to as "the deprotection (reaction)".

Such protective reactions are, for example, described in detail in Theodora W. Greene, "Protective Groups in Organic Synthesis", U.S., John Wiley & Sons, Inc. 1981, and they are preferably used. The reactions are appropriately selected in consideration of reactivity and yield of protection reaction and deprotection reaction, stability in a state of

containing the protective group, manufacturing cost. In addition, the stage of introducing the protective group in the polymerization reaction may be monomer stage, oligomer stage, or polymer stage.

More preferable protection reaction includes, from the viewpoint of reactivity and stability, the method of protection/deprotection of ketone moiety at the ketal moiety; and the method of protection/deprotection of ketone moiety at the ketal moiety by a hetero atom-analog such as thioketal. In the polymer electrolyte material and the polymer electrolyte membrane according to the present invention, more preferable constituent unit containing protective group is the one containing at least one selected from the general formulae (U1) and (U2).

[Chemical formula 21]

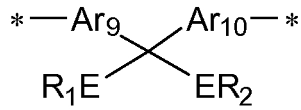

(U1)

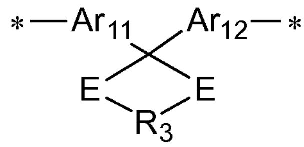

(U2)

where, in the formulae (U1) and (U2), $Ar_9$ to $Ar_{12}$ are each an arbitrary divalent arylene group; $R_1$ and $R_2$ are each at least one kind of group selected from H and alkyl group; $R_3$ is an arbitrary alkylene group; E is O or S, each may represent two or more kinds of groups; the group represented by the formulae (U1) and (U2) may be arbitrarily substituted; the symbol * signifies the bond moiety with the general formulae (U1) and (U2) or other constituent unit.

Among these, from the viewpoint of odor, reactivity, stability, of the compound, the most preferable is that E is O in the general formulae (U1) and (U2), that is, the method of protection/deprotection of ketone moiety at the ketal moiety is the most preferable.

In the general formula (U1), $R_1$ and $R_2$ are more preferably alkyl group from the viewpoint of stability, further preferably alkyl group having 1 to 6 of carbons, and most preferably alkyl group having 1 to 3 carbons. In addition, in the general formula (U3), from the viewpoint of stability, $R_3$ is preferably alkylene group having 1 to 7 carbons, that is, a group represented by $C_{n1}H_{2n1}$ (n1 is an integer of 1 to 7), and most preferably alkylene group having 1 to 4 carbons. Specific examples of $R_3$ include, $-CH_2CH_2-$, $-CH(CH_3)CH_2-$, $-CH(CH_3)CH(CH_3)-$, $-C(CH_3)_2CH_2-$, $-C(CH_3)_2CH(CH_3)-$, $-C(CH_3)_2C(CH_3)_2-$, $-CH_2CH_2CH_2-$, $-CH_2C(CH_3)_2CH_2-$, and these are not limited thereto. As to $R_3$, from the viewpoint of stability and easiness in synthesis, the most preferable is at least one selected from $-CH_2CH_2-$, $-CH(CH_3)CH_2-$, and $-CH_2CH_2CH_2-$.

Among the constituent units represented by the general formulae (U1) and (U2), from the viewpoint of stability such as hydrolysis resistance, the one having at least the general formula (U2) is preferably used.

In the general formulae (U1) and (U2), preferable organic groups as $Ar_9$ to $Ar_{12}$ are phenylene group, naphthylene group, and biphenylene group. These organic groups may be arbitrarily substituted. As the block copolymer according to the present invention, from the viewpoint of solubility and availability of raw material, both $Ar_{11}$ and $Ar_{12}$ in the general formula (U2) are preferably phenylene groups, and most preferably both of them are p-phenylene groups.

In the present invention, the method of performing protection of the ketone moiety by ketal includes the method of causing a precursor compound having ketone group to react with a mono-functional and/or bi-functional alcohol in the presence of an acid catalyst. The alcohol is an aliphatic alcohol having 1 to 20 carbons. An improvement method for manufacturing the ketal monomer used in the present invention is the reaction between 4,4'-dihydroxybenzophenone as the ketone precursor and bi-functional alcohol, in the presence of alkylorthoester and a solid catalyst.

In the present invention, the method of performing deprotection of at least a part of the ketone moiety protected by the ketal, to thereby set the part to the ketone moiety is not specifically limited. The deprotection reaction can be performed in the presence of water and acid under a homogeneous or heterogeneous condition, but from the viewpoint of mechanical strength, physical durability, and solvent resistance, the method of performing acid treatment after molding into membrane is more preferable. Specifically, it is possible to deprotect the molded membrane by immersing it in an aqueous solution of hydrochloric acid or an aqueous solution of sulfuric acid. The concentration of acid and the temperature of aqueous solution can be adequately selected.

The weight ratio of the necessary acidic aqueous solution to the polymer is preferably in a range of 1 to 100 fold, and furthermore a large volume of water can be used. The acid catalyst is used preferably at a concentration of 0.1 to 50% by weight to the existing water. Preferred acid catalyst includes: strong mineral acid (strong inorganic acid) such as hydrochloric acid, nitric acid, fluorosulfonic acid, and sulfuric acid; and strong organic acid such as p-toluene

sulfonic acid and trifluoromethane sulfonic acid. The quantity of acid catalyst and of excessive water, the reaction pressure, can be adequately selected depending on the polymer membrane thickness.

For example, with a membrane having a thickness of 25 μm, it is possible to readily deprotect nearly the total amount of the membrane by immersing the membrane in an acidic aqueous solution exemplified by aqueous solution of 6N hydrochloric acid and aqueous solution of 5% by weight of sulfuric acid, followed by heating the membrane for 1 to 48 hours at room temperature to 95°C. Furthermore, even when the membrane is immersed in an aqueous solution of 1N hydrochloric acid for 24 hours at 25°C, substantially all the protective groups can be deprotected. However, as the condition of deprotection, the above methods are not limited, and there can be performed deprotection by using acidic gas, organic acid, or heat treatment.

Specifically, for example, the precursor of the block copolymer containing the constituent unit represented by the general formulae (U1) and (U2) can be synthesized by using a compound represented by the general formulae (U1-1) and (U2-1) as the divalent phenol compound, and by using aromatic nucleophilic substitution reaction with an aromatic active dihalide compound. The constituent unit represented by the general formulae (U1) and (U2) may be derived from the divalent phenol compound or may be derived from the aromatic active dihalide compound. However, in consideration of the reactivity of the monomer, the use of a compound derived from a divalent phenol compound is more preferable.

[Chemical formula 22]

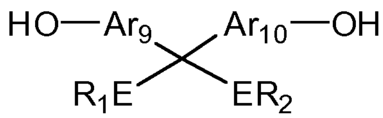

(U1-1)

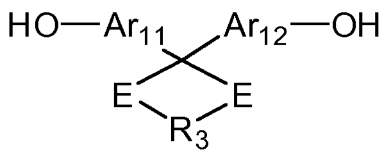

(U2-1)

where, in the general formulae (U1-1) and (U2-1), $Ar_9$ to $Ar_{12}$ are each an arbitrary divalent arylene group; $R_1$ and $R_2$ are each at least one of H and alkyl group; $R_3$ is an arbitrary alkylene group; and E is O or S. The compound represented by the general formulae (U1-1) and (U2-1) may be arbitrarily substituted.

Specific examples of the preferred divalent phenol compounds used in the present invention are compounds represented by the general formulae (r1) to (r10), and derivatives from these divalent phenol compounds.

[Chemical formula 23]

Among these divalent phenol compounds, from the viewpoint of stability, the compounds represented by the general formulae (r4) to (r10) are preferred, more preferably the compounds represented by the general formulae (r4), (r5), and (r9), and most preferably the compound represented by the general formula (r4).

In the synthesis of oligomer by the aromatic nucleophilic substitution reaction being conducted in order to obtain the segment to be used in the present invention, the oligomer can be obtained by the reaction of the above monomer mixture in the presence of a basic compound. The polymerization can be performed at temperatures ranging from 0°C to 350°C, and the temperatures from 50°C to 250°C are preferred. When the temperature is lower than 0°C, the reaction tends not to proceed sufficiently, and when the temperature is higher than 350°C, the polymer decomposition tends to start occurring. Although the reaction can be done without solvent, it is preferable to conduct the reaction in a solvent. Applicable solvents include aprotic polar solvents, such as N,N-dimethylacetoamide, N,N-dimethylformamide, N-methyl-2-pyrrolidone, dimethylsulfoxide, sulfolane, 1,3-dimethyl-2-imidazolidinone, and hexamethylsulfone triamide, but the solvents are not limited thereto, and any solvent can be applied if only the solvent can be used as a stable one in the aromatic nucleophilic substitution reaction. These organic solvents can be used alone or as a mixture of two or more thereof.

Examples of the basic compounds are sodium hydroxide, potassium hydroxide, sodium carbonate, potassium carbonate, sodium hydrogen carbonate, and potassium hydrogen carbonate, but they are not limited thereto, and any basic compound can be used as long as the compound can change the aromatic diols into the active phenoxide structure. In addition, in order to increase the nucleophilicity of the phenoxide, the addition of a crown ether such as 18-crown-6 is preferable. These crown ethers, in some cases, coordinate with sodium ions and potassium ions in the sulfonic acid group, to thereby improve the solubility to organic solvent, and can be favorably used.

In the aromatic nucleophilic substitution reaction, water is generated as a byproduct, in some cases. At this time, independent of the polymerization solvent, toluene can coexist in the reaction system to remove the water from the system as an azeotrope. As the method of removing water from the reaction system, water-absorbent such as molecular sieve can be used.

The azeotropic agent to be used for removing reaction water or water introduced during the reaction is normally an arbitrary inactive compound which does not substantially interfere with the polymerization, which carries out co-distillation with water, and boils at temperatures ranging from about 25°C to about 250°C. The normal azeotropic agent includes benzene, toluene, xylene, chlorobenzene, methylene chloride, dichlorobenzene, trichlorobenzene, cyclohexane. Naturally, it is useful to select an azeotropic agent having lower boiling point than the boiling point of the bipolar solvent to be used. Although an azeotropic agent is normally used, the use of the azeotropic agent is not always required when the high reaction temperature, for example, 200°C or higher is used, specifically when an inert gas is continuously sprayed onto the reaction mixture. Normally, the reaction is desirably conducted in a state where no oxygen exists in an inert atmosphere.

When the aromatic nucleophilic substitution reaction is conducted in a solvent, it is preferred to charge the monomer so that the concentration of polymer to be obtained is 5 to 50% by weight. When the concentration is smaller than 5% by weight, the degree of polymerization tends not to increase. On the other hand, when the concentration is larger than 50% by weight, the viscosity of the reaction system becomes excessively high, which tends to result in difficulty in post-treatment of the reaction products.

After the completion of the polymerization reaction, the solvent is removed by vaporization from the reaction solution, and the desired polymer is obtained after rinsing the residue, as necessary. In addition, it is also possible to obtain the polymer by the processes of: adding the reaction solution to a solvent which has low polymer solubility and high solubility of by-product inorganic salt, to thereby remove the inorganic salt and to precipitate the polymer as solid; and filtering the sediment. The recovered polymer is rinsed by, as necessary, water, alcohol, or other solvents, followed by being dried. When the desired molecular weight is obtained, the halide or the phenoxide terminal group can be caused to react by introducing a phenoxide or a halide terminal-blocking agent which forms a stable terminal group, in some cases.

The molecular weight of thus obtained block copolymer used for the polymer electrolyte membrane according to the present invention is, as the weight-average molecular weight in terms of polystyrene, in a range of 1,000 to 5 million, preferably 10,000 to 500, 000. When the molecular weight is smaller than 1,000, any of the mechanical strength including cracking, the physical durability, and the solvent resistance, of the molded membrane may be insufficient. On the other hand, when the molecular weight exceeds 5 million, there arise problems such as insufficient solubility and high solution viscosity, thereby resulting in poor processability.

Meanwhile, the chemical structure of the block copolymer used for the polymer electrolyte membrane according to the present invention can be confirmed by infrared absorption spectra: S=O absorption of 1,030 to 1,045 $cm^{-1}$ and 1,160 to 1,190 $cm^{-1}$; C-O-C absorption of 1,130 to 1,250 $cm^{-1}$; C=O absorption at 1, 640 to 1,660 $cm^{-1}$, and these composition ratios can be determined by the neutralization titration of slufonic acid group and by the elemental analysis. In addition, nuclear magnetic resonance spectra ($^1H$-NMR) make it possible to confirm the structure by the peak of aromatic proton of 6.8 to 8.0 ppm, for example. Furthermore, the position of sulfonic acid group and the arrangement thereof can be confirmed by the solution $^{13}C$-NMR and the solid $^{13}C$-NMR.

Next, there will be exemplified a specific synthesis method of the block copolymer containing each one or more of: the segment (A1) containing an ionic group; the segment (A2) not containing an ionic group; and the linker moiety connecting the segments. However, the present invention is not limited by the examples.

Specific examples of the method of manufacturing the block copolymer used in the polymer electrolyte membrane according to the present invention are as follows:

Method a: the method of manufacturing the block copolymer by the processes of: causing a dihalide linker to react with any of the segment represented by the general formula (S1) having -OM group at both ends thereof and the segment represented by the general formula (S2) having -OM group at both ends thereof; and then conducting polymerization alternately with another segment.

Method b: the method of manufacturing the block copolymer by the process of randomly polymerizing, with the dihalide linker, the segment represented by the general formula (S1) having -OM group at both ends thereof and the segment represented by the general formula (S2) having -OM group at both ends thereof.

Method c: The method including the processes of: manufacturing the block copolymer by the Method a or the Method b through the use of a non-sulfonated compound of the segment represented by the general formula (S1); and introducing selectively an ionic group into the non-sulfonated portion of the segment represented by the general formula (S1).

Method d: The method of combination of the above Method a to c.

In the present specification, O of -OM group is oxygen, and M is H, metal cation, and ammonium cation. In the

case of the metal cation, the valence number are not specifically limited in use. Specific examples of preferred metal cation include Li, Na, K, Rh, Mg, Ca, Sr, Ti, Al, Fe, Pt, Rh, Ru, Ir, and Pd. Among these, Na, K, and Li are more preferable. As the -OM group, examples are hydroxyl group (-OH group), $-O^{-}NR_4^{+}$ group (R is H or an organic group), -ONa group, -OK group, and -OLi group.

Among the above methods, the Method a is most preferred from the viewpoint that the alternating copolymerization can control the phase-separated domain size and can manufacture chemically stable block copolymer.

That is, it is preferable that the method of manufacturing the block copolymer used for the polymer electrolyte membrane according to the present invention preferably includes at least the processes (1) and (2) described below. By including these processes, there can be achieved the enhancement of mechanical strength and durability due to the increase in the molecular weight, and by alternate introduction of both segments, there can be obtained the block copolymer having precise control of phase-separated structure and domain size and being excellent in proton conductivity at low-humidification conditions.

(1) The process of introducing the linker moiety to the -OM group (M is H, metal cation, or ammonium cation) at both ends of the segment (A1) containing an ionic group or the -OM group at both ends of the segment (A2) not containing an ionic group.

(2) The process of obtaining a block copolymer through polymerization of the linker moieties at both ends of the segment with the -OM group at both ends of another segment.

The linker used in the present invention is required to be a compound which has high reactivity so as to be able to connect different segments while suppressing randomization and segment-cutting by the ether-exchange reaction. Specific examples of preferred linker compound are decafluorobiphenyl, hexafluorobenzene, 4,4'-difluorodiphenylsulfone, and 2,6-difluorobenzonitrile. However, the present invention is not limited to these compounds. When a polyfunctional linker such as decafluorobiphenyl and hexafluorobenzene is used, control of the reaction conditions allows manufacturing a block copolymer having branched structure. In that case, by changing the charge composition of polymer having non-sulfonated segment represented by the formula (S1) and the polymer having the segment represented by the formula (S2), there can be separately manufactured the block copolymer with straight chain structure and the block copolymer with branched structure.

In the Method a, specific examples of the segment represented by the formula (S1) having -OM group at both ends thereof and the segment represented by the formula (S2) having -OM group at both ends thereof are the formulae (H3-1) and (H3-2), respectively. Specific examples of these segments prepared by the reaction with dihalide linker are the formulae (H3-3) and (H3-4), respectively. The present invention, however, is not limited by these examples.

[Chemical formula 24]

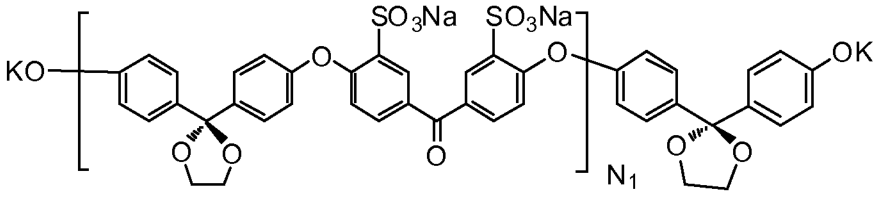

(H3-1)

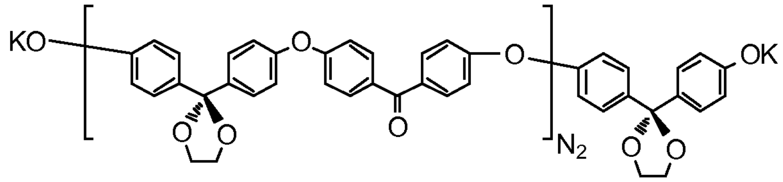

(H3-2)

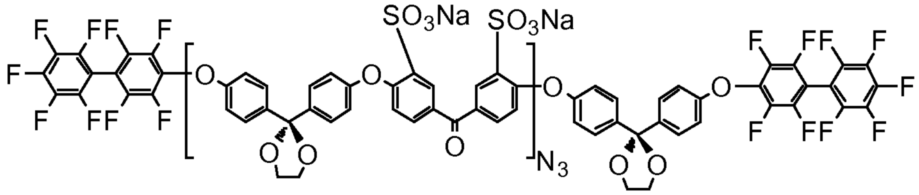

(H3-3)

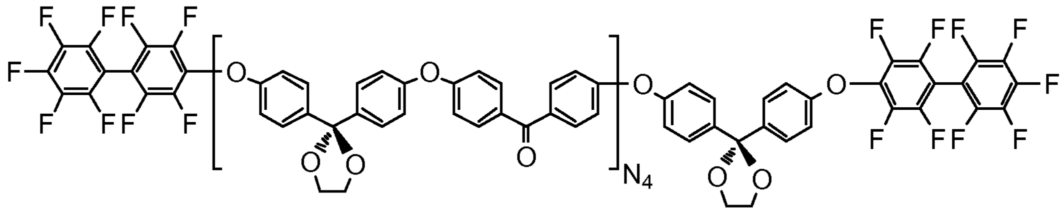

(H3-4)

where, in the formulae (H3-1) to (H3-4), $N_1$, $N_2$, $N_3$, and $N_4$ are each independently an integer of 1 to 150.

In the formulae (H3-1) to (H3-4), halogen atom is expressed by F, terminal -OM group is expressed by -OK group, and alkali metal is expressed by Na and K. However, they are not limited thereto. The above formulae are given in order to help understanding of readers, and they do not necessarily express strict chemical structure, accurate composition, arrangement, position of sulfonic acid group, number, molecular weight, of the polymerization components of the polymer, and they are not limited thereto.

Furthermore, into any of the segments in the formulae (H3-1) to (H3-4), ketal group is introduced as the protective group. However, according to the present invention, the protective group is required to be introduced into a component having high crystallinity and low solubility. Therefore, the segment (A1) containing an ionic group represented by the formulae (H3-1) and (H3-3) not necessarily requires the protective group, and from the viewpoint of durability and dimensional stability, the one without protective group is also preferably used.

From the block given in an example of the formula (H3-1) can be synthesized an oligomer with controlled molecular weight through the reaction between a bisphenol ingredient and an aromatic dihalide ingredient by a ratio of $(N_1 + 1)$ to $N_1$. The formula (H3-2) is the same to the above.

The reaction temperature of block copolymerization using linker is preferably 140°C or lower heating condition, and more preferably 80°C or higher and 120°C or lower. By setting the reaction temperature to 120°C or lower, the randomization of polymer structure by the ether-exchange in the reaction can be sufficiently suppressed. If the reaction temperature becomes 80°C or higher, there can be obtained a polymer having a random polymer structure.

The method of molding the block copolymer of the present invention into a polymer electrolyte membrane is not specifically limited, and there can be used a method of membrane-forming in a solution state or in a molten state at the stage having the protective group such as ketal. In the former case, there is a proposed method of forming the membrane by dissolving the polymer electrolyte material in a solvent such as N-methyl-2-pyrrodidone, and flow-expanding the solution for coating a glass plate, followed by removing the solvent.

Applicable solvent used for the membrane-formation is the one that dissolves the polymer electrolyte material and then allows removing thereof. Examples of the solvents preferably used are: aprotic polar solvent such as N,N-dimethylacetoamide, N,N-dimethylformamide, N-methyl-2-pyrrodidone, dimethylsulfoxide, sulfolane, 1,3-dimethyl-2-imidazolidinone, and hexamethylphosphone triamide; ester-based solvent such as γ-butylolactone and butylacetate; carbonate-based solvent such as ethylene carbonate and propylene carbonate; alkylene glycol monoalkylether such as ethyleneglycol monomethylether, ethyleneglycol monoethylether, propyleneglycol monomethylether, and propyleneglycol monoethylether; alcohol-based solvent such as isopropanol; water; and a mixture thereof. Among these, aprotic polar solvent is preferred owing to the highest solubility. In addition, in order to increase the solubility of the segment (A1) containing an ionic group, the addition of crown ether such as 18-crown-6 is preferred.

In addition, in the present invention, when the solution membrane-formation is performed using the block copolymer, the selection of solvent is important for the phase-separated structure, and a mixed use of the aprotic polar solvent with a solvent having low polarity is also a preferable method.

In order to obtain tough membrane, a preferred method is to subject the polymer solution prepared to give a necessary solid concentration, to normal pressure filtration or positive pressure filtration, and to thereby remove a foreign substance from the polymer electrolyte solution. Although the filter medium used herein is not specifically limited, glass filter and metallic filter are preferable. For the filtration, the minimum filter pore size allowing the polymer solution to pass therethrough is preferably 1 μm or smaller. Unless the filtration is performed, inclusion of a foreign substance occurs, which is unfavorable because membrane breakage occurs and durability deteriorates.

The thus obtained polymer electrolyte membrane is preferably subjected to heat treatment in a state where at least a part of the ionic groups is a metal salt. When the polymer electrolyte material used is polymerized in a metal salt state, it is preferable to form the membrane and to perform the heat treatment in that condition. The metal of the metallic salt is the one capable of forming a salt with a sulfonic acid, and from the viewpoint of price and environmental load, the preferred metal includes Li, Na, K, Rb, Cs, Mg, Ca, Sr, Ba, Ti, V, Mn, Fe, Co, Ni, Cu, Zn, Zr, Mo, and W. Among these, more preferable ones are Li, Na, K, Ca, Sr, and Ba, and even more preferable ones are Li, Na, and K.

The heat treatment temperature is preferably in a range of 80°C to 350°C, more preferably 100°C to 200°C, and particularly preferably 120°C to 150°C. The heat treatment time is preferably 10 seconds to 12 hours, more preferably 30 seconds to 6 hours, and particularly preferably 1 minute to 1 hour. When the heat treatment temperature is excessively low, the mechanical strength and physical durability become insufficient in some cases. On the other hand, when the heat treatment temperature is excessively high, the chemical decomposition of the membrane material proceeds in some cases. When the heat treatment time is shorter than 10 seconds, the effect of heat treatment becomes insufficient. In contrast, when the heat treatment time exceeds 12 hours, the membrane material tends to deteriorate. The polymer electrolyte membrane obtained by the heat treatment can be proton-substituted by immersion into an acidic aqueous solution, as necessary. The polymer electrolyte membrane of the present invention makes it possible to simultaneously achieve a better balance of proton conductivity and physical durability by molding in this way.

The method of converting the block copolymer used in the present invention into the polymer electrolyte membrane is performed by the processes of: forming the membrane constituted by the block copolymer by the above method; and then deprotecting at least a part of the ketone moiety being protected by ketal, to thereby obtain the ketone moiety. According to the method, it is possible to perform solution membrane-formation of the block copolymer containing the block not containing an ionic group which is poor in solubility, and to thereby simultaneously achieve the proton conductivity, mechanical strength, and physical durability.

The thickness of the polymer electrolyte membrane obtained by the present invention is used preferably in a range of 1 to 2,000 μm. In order to attain practical-use level of mechanical strength and physical durability of the membrane, the thickness is preferably larger than 1μm. In order to decrease the membrane resistance, or to improve the power generation performance, the thickness is preferably smaller than 2,000 μm. More preferred membrane thickness range is from 3 to 50 μm, particularly preferable range is from 10 to 30 μm. That membrane thickness can be controlled by the solution concentration or by the coating thickness on the substrate.

In addition, to the polymer electrolyte membrane obtained in the present invention, there can be added additives such as crystallization nucleating agent, plasticizer, stabilizer, antioxidant, mold-releasing agent, used for ordinary polymer compounds, within a range not inversely affecting the object of the present invention.

Furthermore, to the polymer electrolyte membrane obtained in the present invention, there can be added various polymers, elastomers, fillers, fine particles, various additives, within a range not inversely affecting the above characteristics, in order to enhance the mechanical strength, heat stability, processability. In addition, the polymer electrolyte membrane may be reinforced with fine porous film, nonwoven cloth, mesh.

The polymer electrolyte fuel cell makes use of a hydrogen ion-conductive polymer electrolyte membrane as the electrolyte membrane, and has a structure of laminating a catalyst layer, an electrode substrate, and a separator, alternately, on both sides of the membrane. Among these, the one in which the catalyst layer is laminated on both sides of the electrolyte membrane, (that is, the layer structure of catalyst layer / electrolyte membrane / catalyst layer) is called "the catalyst-coated electrolyte membrane (CCM)", and the one in which the catalyst layer and the gas-diffusion substrate are alternately laminated on both sides of the electrolyte membrane (that is, the laminated structure of gas-diffusion substrate / catalyst layer / electrolyte membrane / catalyst layer / gas-diffusion substrate) is called the "electrode-electrolyte membrane joined assembly (MEA)".

A common method of manufacturing the catalyst layer-coated electrolyte membrane is the coating method of coating and drying a catalyst layer paste composition for forming the catalyst layer on the surface of the electrolyte membrane. However, this coating method causes swelling and deformation of the electrolyte membrane caused by the

solvent such as water or alcohol, thus raising a problem of difficulty in forming the desired catalyst layer on the surface of the electrolyte membrane. Furthermore, in the drying process, the electrolyte membrane is also exposed to high temperature atmosphere, thereby resulting in raising a problem of thermal expansion and deformation. In order to solve the problem, there is proposed a method of laminating the catalyst layer onto the electrolyte membrane (transfer method), in which only the catalyst layer is formed on the substrate in advance, and then the catalyst layer is transferred onto the electrolyte membrane (for example, Japanese Patent Laid-Open No. 2009-9910) .

The polymer electrolyte membrane obtained in the present invention has toughness and has excellent solvent resistance owing to its crystallinity, and thus can specifically be preferably used also as the catalyst layer-coated electrolyte membrane by any of the coating method and the transfer method.

When MEA is prepared by hot press, the method is not specifically limited, and a known method can be applied, such as the chemical plating method, given in J. Electrochem. Soc., 1985, 53, p.269, (Electrochemical Society of Japan), and the hot-press joining method for the gas-diffusion electrode, given in Electrochemical Science and Technology, 1988, 135, 9, p.2209.

When composite is applied by hot press, the temperature and the pressure may be adequately selected depending on the thickness of electrolyte membrane, the water content, the catalyst layer, and the electrode substrate. According to the present invention, press-composite can be applied even when the electrolyte membrane is in a dry state or in a state of absorbing water. Specific press method includes roll press specifying pressure and clearance, flat press specifying pressure, and from the viewpoint of industrial productivity and suppression of thermal decomposition of polymer material containing an ionic group, the press is preferably performed in a temperature range of 0°C to 250°C. From the viewpoint of protection of electrolyte membrane and of electrode, the press is preferably performed under lower pressure as much as possible, and in the case of flat press, 10 MPa or smaller pressure is preferred. A preferred selectable method is, from the viewpoint of prevention of short-circuit of anode and cathode electrodes, to join the electrode and the electrolyte membrane to thereby form the fuel cell without applying composite-formation by the hot press process. With that method, when power generation is repeated as the fuel cell, the deterioration of electrolyte membrane presumably originated from the short-circuit position tends to be suppressed, which improves the durability of fuel cell.

Furthermore, the intended uses of the polymer electrolyte fuel cell using the polymer electrolyte membrane of the present invention are not specifically limited, but power supply source to mobile body is a preferred one. In particular, preferred uses are substitution of conventional primary cell or rechargeable cell, or hybrid power sources therewith, and include: handy equipment such as cell phone, personal computer, PDA, TV, radio, music player, game player, head set, and DVD player; various robots of human type and animal type for industrial use; household electric appliances such as cordless vacuum cleaner; toys; power source of mobile body such as motor bicycle, motorbike, automobile, bus, truck, ship, and railway; and stationary power generator. Description of Embodiments

Hereinafter, the present invention will be described in more detail referring to examples, but the present invention is not limited by these examples. The conditions for measuring the physical properties are as follows. In addition, although, in the examples, chemical structural formulae are inserted, they are inserted in order to help the understanding of readers, and they are not limited thereto.

(1) Ion-exchange capacity

The ion-exchange capacity was measured by neutralization titration. The measurements were performed three times, and then the average of them was taken.

1. There was wiped off the moisture on the surface of the electrolyte membrane on which proton substitution was performed and which was fully rinsed by pure water, and then the membrane was dried for 12 hours or more in vacuum at 100°C. After that, the dry weight of the membrane was obtained.
2. To the electrolyte, there were added 50 mL of aqueous solution of 5% by weight of sodium sulfate, allowed to stand for 12 hours for conducting ion-exchange.
3. The generated sulfuric acid was titrated using aqueous solution of 0.01 mol/L sodium hydroxide. To the solution, commercially available 0.1 w/v% phenolphthalein solution for titration was added as the indicator, and the end point was set to be a point at which the color changes to light reddish violet.
4. The ion-exchange capacity was obtained by the following formula.

Ion-exchange capacity (meq/g) = [Concentration of aqueous solution of sodium hydroxide (mmol/mL) x (Titration amount (mL))]/[Dry weight of sample (g)]

(2) Proton conductivity

The membrane-shaped sample was immersed for 24 hours in pure water at 25°C. Then the sample was held in a thermo-hygrostat at 80°C and at a relative humidity of 25 to 95% for each 30 minutes at individual steps. After that, the proton conductivity was measured by the controlled potential AC impedance method.

The measurement apparatus used was an electrochemical measurement system of Solartron Inc. (Solartron 1287 Electrochemical Interface and Solartron 1255B Frequency Response Analyzer). The Controlled potential impedance measurement was performed by the 2-probe method and the proton conductivity was obtained. The AC amplitude was 50 mV. The sample used was a membrane having 10 mm in width and 50 mm in length. The measurement jig was fabricated by phenol resin, and the measurement portion was opened. The electrode used was platinum plates (2 plates each having a thickness of 100 μm). The electrodes were arranged so as the distance therebetween to be 10 mm and so as to be in parallel to each other and be orthogonal to the longitudinal direction of the sample membrane, on front and rear side of the sample membrane.

(3) Number-average molecular weight and weight-average molecular weight

The number-average molecular weight and the weight-average molecular weight of polymer were measured by GPC. As the integrated analyzer of ultraviolet ray detector and differential diffractometer, HLC-8022GPC manufactured by TOSOH Corporation was applied. As the GPC column, two columns of TSK gel Super HM-H (6.0 mm in inner diameter, 15 cm in length, manufactured by TOSOH Corporation) were used. The measurement was done using N-methyl-2-pyrrolidone solvent (N-methyl-2-pyrrolidone solvent containing 10 mmol/L of lithium bromide) under a condition of 0.1% by weight of sample concentration, 0.2 mL/min of flow rate, at 40°C. The number-average molecular weight and the weight-average molecular weight were obtained in terms of standard polystyrene.

(4) Membrane thickness

The measurement was performed by ID-C112 manufactured by Mitsutoyo Co. mounted on a granite comparator stand BSG-20 manufactured by Mitsutoyo Co.

(5) Determination of crystallization heat quantity by differential scanning calorimetry (DSC)

A polymer electrolyte membrane (about 10 mg) as the specimen was preliminarily dried at a temperature at which the sulfonic acid is not decomposed (for example, at 40°C to 100°C) and water was removed, and then the weight was determined. In this procedure, since the chemical structure and the higher structure of the polymer may vary, the temperature was not raised up to more than the crystallization point or the thermal decomposition point. After measuring the weight, the polymer electrolyte membrane was analyzed by the temperature modulated differential scanning calorimetry at the first temperature rise stage under the following conditions.

DSC apparatus: DSC Q100, manufactured by TA Instruments, Inc. Range of measurement temperature: 25°C to thermal decomposition temperature (for example, 310°C)
Temperature rise speed: 5°C/min
Amplitude: ±0.796°C
Specimen quantity: about 10 mg
Specimen pan: Aluminum-made crimp pan
Ambient atmosphere: Nitrogen 50 mL/min
Preliminary drying: Vacuum drying at 60°C for 1 hour

The crystallization heat quantity was calculated as the value doubled the heat quantity from the low temperature side to the peak top. Since the specimen contained water, the water quantity was calculated from the detected quantity of vaporization heat of water, and the weight of the polymer electrolyte material was corrected. The vaporization heat of water is 2277 J/g.

Weight of water in the specimen (g) = Vaporization heat of water in the specimen (J/g) x Quantity of the specimen (g) / 2277 (J/g)

Correction value of the crystallization heat quantity (J/g) = Crystallization heat quantity (J/g) x Quantity of the specimen (g) / (Quantity of the specimen - Weight of water in the specimen (g))

(6) Determination of degree of crystallinity using the wide-angle X-ray diffractometry (XRD)

A polymer electrolyte material as the specimen was mounted on the diffractometer, and the X-ray diffractometry was conducted under the following conditions.

X-ray diffractometer: RINT 2500V, manufactured by Rigaku Corporation
X-ray: Cu-Kα
X-ray output: 50 kV - 300 mA
Optical system: Focusing optical system
Scanning speed: 2θ=2°/min
Scanning method: 2θ-θ
Scanning range: 2θ = 5° to 60°
Slit: Divergence slit - 1/2°, Light-receiving slit - 0.15 mm, Scattering slit - 1/2°

The degree of crystallinity was calculated by: separating individual components through the profile fitting, thus determining the diffraction angle and the integrated intensity of each component; then calculating the degree of crystallinity from the general formula (s2) using thus obtained integrated intensity of the crystallization peak and the amorphous halo.

Degree of crystallinity (%) = [(Sum of integrated intensity of entire crystallization peaks) / (Sum of integrated intensity of entire crystallization peaks and of amorphous halos)] x 100 (s2)

(7) Observation of phase-separated structure by transmission electron microscope (TEM)

A sample piece was immersed in an aqueous solution of 2% by weight of lead acetate as a staining agent, where the sample was allowed to stand for 48 hours at 25°C. Then, the sample subjected to a staining treatment was taken out from the solution, the sample was embedded in a visual light curing resin, the sample was irradiated with visual light for 30 seconds for fixing thereof.

Using an ultramicrome, the thin piece of 100 nm thickness was machined at room temperature, and the obtained thin piece was fixed on a Cu grid and was subjected to TEM observation. The observation was done at an accelerating voltage of 100 kV, and the photographing was executed so that the magnification becomes x8,000, x20,000, and x100,000, respectively. Microscope used was TEM H7100FA (manufactured by Hitachi, Ltd.)

(8) Observation of phase-separated structure by TEM tomography

The thin piece of specimen prepared by the method of (7) was mounted on a collodion film, and was observed under the following conditions.

Apparatus: Field emission type electron microscope (HRTEM) JEM 2100F, manufactured by JEOL
Acquisition of image: Digital Micrograph
System: Marker method
Accelerated voltage: 200 kV
Photographing magnitude: x30,000
Tilt angle: +60° to -62°
Reconstruction resolution: 0.71 nm/pixel

Marker method was applied to the 3-dimension reconstruction processing. The alignment marker in performing the 3-dimensional reconstruction used Au colloid particles on the collodion film. With the marker as the basis, the

specimen was tilted in a range of +61° to -62° with every 1° of inclination to create total 124 sheets of TEM images through the series of continuous inclination images of photographed TEM images, and the CT reconstruction processing was performed on the basis of these TEM images, and thus the 3-dimensional phase-separated structure was observed.

(9) Autocorrelation function using TEM image and the Method of calculating cycle length

Using the image processing software, Image J, the cycle length was calculated from the autocorrelation function by the following-given method.

1. Reading the image (File size is changed to 512 x 512 pixels or 1024 x 1024 pixels, thus the image resolution is checked.)
2. Executing the Process/FFE/FD Math to generate the image from the autocorrelation function as the Result, (The image type is recommended to use 16 bit).
3. Executing Image/Adust/Brightness Contrast to conduct color correction.
4. Executing Line Profile using Line tool to pass through the bright point at center of the image.
5. Executing Analyze/Plot Profile to generate Plot of Result.
6. Executing List Button to generate intensity and distance, thus forming the graph.
7. Measuring the distance between the center brightness to the first proximity peak of the autocorrelation function (generated image), thus calculating the cycle length.

(10) Measurement method of purity

Quantitative analysis was performed by Gas chromatography (GC) under the following conditions.

Column: DB-5 (manufactured by J&W Inc.) L = 30 m, $\phi$ = 0.53 mm, D = 1.50 $\mu$m
Carrier: Helium (Line velocity = 35.0 cm/sec)
Analytical condition

Inj. temp. = 300°C
Detec. temp. = 320°C
Oven = 50°C x 1 min
Rate = 10°C/min
Final = 300°C x 15 min
SP ratio = 50:1

(11) Hot water resistance

The hot water resistance of the polymer electrolyte membrane was evaluated by the measurement of dimensional change rate in hot water at 95°C. The electrolyte membrane was cut to a rectangular shape having about 5 cm in length and about 1 cm in width, and after immersion of the cut piece of the electrolyte membrane in hot water for 24 hours at 25 °C, then the length (L1) was measured using Vernier calipers. After further immersion of the electrolyte membrane in hot water for 8 hours at 95°C, the length (L2) was again measured using Vernier calipers, and the magnitude of dimensional change was visually observed.

(12) Nuclear magnetic resonance (NMR) spectra

The $^1$H-NMR measurement was performed under the following conditions, to confirm the structure and to quantify the molar composition ratio of the segment (A1) containing an ionic group to the segment (A2) not containing an ionic group. The molar composition ratio was calculated from the integral peak values appearing at 8.2 ppm (originated from disulfonate-4,4'-difluorobenzophenone) and 6.5 to 8.0 ppm (originated from all aromatic protons except for disulfonate-4,4'-difluorobenzophenone).

Apparatus: EX-270 manufactured by JOEL Ltd.
Resonance frequency: 270 MHz ($^1$H-NMR)
Measurement temperature: Room temperature
Dissolving solvent: DMSO-d6
Internal reference substance: TMS (0 ppm)
Cumulative number: 16

In addition, the measurement of solid $^{13}C$-CP/MAS spectra was performed under the following condition, and the presence or absence of remaining ketal group was confirmed.

Apparatus: CMX-300 Infinity, manufactured by Chemagnetics Inc.

Measurement temperature: Room temperature
Internal reference substance: Si rubber (1.56 ppm) Measurement core: 75.188829 MHz
Pulse width: 90° pulse, 4.5 μsec
Pulse repetition time: ACQTM = 0.03413 sec, PD = 9 sec
Spectrum width: 30.003 kHz
Sample rotation: 7 kHz
Contact time: 4 msec

Synthesis Example 1

Synthesis of 2,2-bis(4-hydroxyphenyl)-1,3-dioxolane (K-DHBP) represented by the general formula (G1)

[Chemical formula 25]

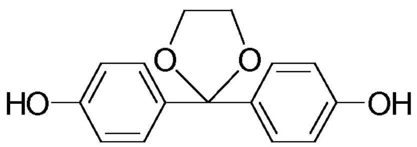

(G1)

To a 500 mL flask equipped with an agitator, a thermometer, and a distilling tube, there were added 49.5 g of 4,4'-dihydroxybenzophenone, 134 g of ethyleneglycol, 96.9 g of ortho-trimethyl formate, and 0.50 g of p-toluenesulfonic acid hydrate, to be dissolved. The solution was agitated for 2 hours while being kept at the temperature of 78°C to 82°C. Furthermore, the internal temperature was gradually increased to 120°C and the heating was continued until the distilling of methyl formate, methanol, and orthotrimethyl formate completely stops. After cooling of the reaction solution to room temperature, the reaction solution was diluted by ethyl acetate, and then the organic layer was rinsed with 100 mL of 5% aqueous solution of potassium carbonate. After separating the solution, the solvent was distilled out. 80 mL of dichloromethane were added to the residue, crystal was deposited, and then after filtration and drying, 52.0 g of 2,2-bis(4-hydroxyphenyl)-1,3-dioxolane were obtained. Through the GC analysis of the crystal, 99.8% of 2,2-bis(4-hydroxyphenyl)-1,3-dioxolane and 0.2% of 4,4'-dihydroxybenzophenone were confirmed.

Synthesis Example 2

Synthesis of disodium 3,3'-disulfonate-4,4'-difluorobenzophenone represented by the general formula (G2)

[Chemical formula 26]

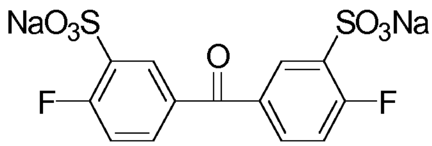

(G2)

109. 1g of 4, 4' -difluorobenzophenone (Aldrich reagent) were reacted in 150 mL of oleum (50% $SO_3$) (reagent of Wako Pure Chemical Industries, Ltd.) for 10 hours at 100°C. Then, the solution was gradually poured into a large volume of water, and after neutralizing the solution by using NaOH, 200 g of NaCl were added and the synthesized product was precipitated. The precipitated product obtained was separated by filtration, followed by recrystallization by using ethanol aqueous solution, and thus there was obtained disodium 3,3'-disulfonate-4,4'-difluorobenzophenone represented by the general formula (G2). The purity was 99.3%. The structure was confirmed by $^1H$-NMR. The impurities were quantitatively analyzed by capillary electrophoresis (organic substances) and by ion chromatography (inorganic substances).

Example 1

(Synthesis of oligomer a1' not containing an ionic group, represented by the general formula (G3))

[Chemical formula 27]

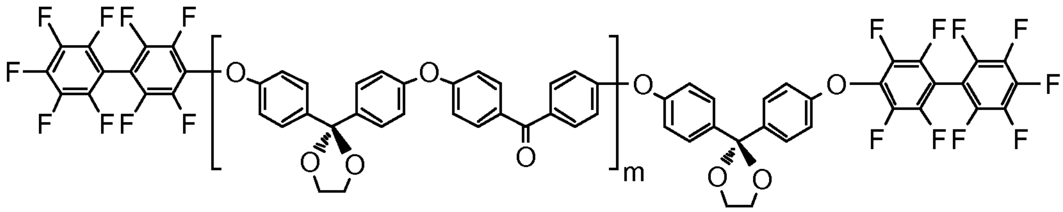

(G3)

where, in (G3), m is a positive integer.

To a 100 mL three neck flask equipped with an agitator, a nitrogen gas inlet tube, and a Dean-Stark trap, there were added 16.59 g of potassium carbonate (Aldrich reagent, 120 mmol), 25.8 g of K-DHBP (100 mmol) obtained in the Synthesis Example 1, and 20.3 g of 4,4'difluorobenzophenone (Aldrich reagent, 93 mmol). After nitrogen purge, the resultant content was dewatered in 300 mL of N-methylpyrrolidone (NMP) and 100 mL of toluene at 160°C. Again, the resultant content was heated and the toluene was removed, then was polymerized for 1 hour at 180°C. Purification was performed by reprecipitation through the use of a large quantity of methanol, and thus there was obtained the oligomer a1 not containing an ionic group (terminal OM group). The symbol M in the OM group signifies Na or K, and the subsequent expression follows this example. The number-average molecular weight was 10,000.

To a 500 mL three neck flask equipped with an agitator, a nitrogen gas inlet tube, and a Dean-Stark trap, there were added 1.1 g of potassium carbonate (Aldrich reagent, 8 mmol), and 20.0 g (2 mmol) of the oligomer a1 not containing an ionic group (terminal OM group). After nitrogen purge, the resultant content was dewatered at 100°C in 100 mL of N-methylpyrrolidone (NMP) and 30 mL of cyclohexane, and then the resultant content was heated and the cyclohexane was removed. Furthermore, 4.0 g of decafluorobiphenyl (Aldrich reagent, 12 mmol) were added and the solution was caused to react for 1 hour at 105°C. Purification was performed by reprecipitation through the use of a large quantity of isopropyl alcohol, and thus there was obtained the oligomer a1' not containing an ionic group (terminal fluoro group), represented by the formula (G3). The number-average molecular weight was 11,000, and the number-average molecular weight of the oligomer a1' not containing an ionic group was obtained as 10,400 (subtracting the linker moiety (molecular weight of 630)).

(Synthesis of oligomer a2 containing an ionic group, represented by the general formula (G4))

[Chemical formula 28]

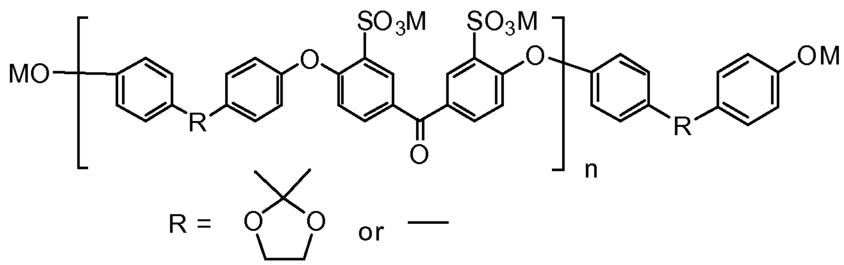

(G4)

where, in (G4), M is Na or K, and n is a positive integer.

To a 1000 mL three neck flask equipped with an agitator, a nitrogen gas inlet tube, and a Dean-Stark trap, there were added 27.6 g of potassium carbonate (Aldrich reagent, 200 mmol), 12.9 g (50 mmol)of K-DHBP obtained in the Synthesis Example 1, 9.3 g of 4,4'-biphenol (Aldrich reagent, 50 mmol), 39.3 g (93 mmol)of disodium 3, 3' -disulfonate-4, 4' -difluorobenzophenone obtained in the Synthesis Example 2, and 17.9 g of 18-crown-6-ether (82 mmol, Wako Pure Chemical Industries, Ltd.) After nitrogen purge, the resultant content was dewatered in 300 mL of N-methylpyrrolidone (NMP) and 100 mL of toluene at 170°C, and then the resultant content was heated and the toluene was removed. The resultant content was polymerized for 1 hour at 180°C. Purification was performed by reprecipitation through the use of a large quantity of isopropyl alcohol, and thus there was obtained the oligomer a2 containing an ionic group (terminal OM group), represented by the formula (G4). The number-average molecular weight was 16,000.

(Synthesis of block copolymer b1 containing: oligomer a2 as the segment (A1) containing an ionic group; oligomer a1 as the segment (A2) not containing an ionic group; and octafluorobiphenylene as the linker moiety)

To a 500 mL three neck flask equipped with an agitator, a nitrogen gas inlet tube, and a Dean-Stark trap, there were added 0.56 g of potassium carbonate (Aldrich reagent, 4 mmol), and 16 g (1 mmol) of the oligomer a2 containing an ionic group (terminal OM group). After nitrogen purge, the resultant content was dewatered at 100°C in 100 mL of N-methylpyrrolidone (NMP) and 30 mL of cyclohexane, and then the resultant content was heated and the cyclohexane was removed. Furthermore, the addition of 11 g (1 mmol) of oligomer a1' not containing an ionic group (terminal fluoro group) causes the solution to react for 24 hour at 105°C. Purification was performed by reprecipitation through the use of a large quantity of isopropyl alcohol, and thus there was obtained the block copolymer b1. The weight-average molecular weight was 340,000.

The block copolymer b1 contained 50 mol% of constituent unit represented by the general formula (S1) as the segment (A1) containing an ionic group, and 100 mol% of constituent unit represented by the general formula (S2) as the segment (A2) not containing an ionic group.

Thus obtained block copolymer b1 was dissolved in 25% by weight of N-methylpyrrolidone (NMP), the resultant solution was pressure-filtered using a glass fiber filter, and the filtered product was treated by performing flow-expanding coating for coating on a glass substrate. Then the glass substrate was dried for 4 hours at 100°C, followed by heat-treating in a nitrogen atmosphere for 10 minutes at 150°C and the polyketalketone membrane (thickness of 25 $\mu$m) was obtained. The solubility of the polymer was extremely high. The membrane was immersed in 10% by weight of sulfuric acid aqueous solution for 24 hours at 95°C, and after proton substitution and deprotection reaction, the resultant substance was then immersed in a large excessive volume of pure water for 24 hours, followed by sufficiently rinsing, and thus the polymer electrolyte membrane was obtained.

The ion-exchange capacity derived from the neutralization titration was 1.7 meq/g, and the molar composition ratio (A1/A2) derived from $^1$H-NMR was 48 mole/52 mol = 0.92, which showed no residual ketal group. The sum of the segment (A1) containing an ionic group and the segment (A2) not containing an ionic group, being contained in the block copolymer, obtained from GPC and $^1$H-NMR was 5. 5. DSC (first cycle of temperature rise stage) showed the crystallization peak, giving the crystallization heat quantity of 26.8 J/g. In addition, no crystallization peak was confirmed in the wide-angle X-ray diffractometry (degree of crystallinity 0%). The electrolyte membrane was extremely tough, and through visual observation, the membrane was found to be a transparent and homogeneous membrane. The proton conductivity was 240 mS/cm at 80°C and 85% RH, and 2 mS/cm at 80°C and 25% RH, which showed excellent proton conductivity under low-humidification conditions. Furthermore, the dimensional change rate was small, giving 9%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 18 nm.

Example 2

(Synthesis of oligomer a3' not containing an ionic group, represented by the general formula (G3))

The oligomer a3 not containing an ionic group (terminal OM group), was synthesized by the method of Example 1 except that the charge quantity of 4,4'-difluorobenzophenone was changed to 20.7 g (Aldrich reagent, 95 mmol). The number-average molecular weight was 15,000.

The oligomer a3' not containing an ionic group (terminal fluoro group), represented by the formula (G3) was synthesized by the method of Example 1 except that 30.0 g (2 mmol) of the oligomer a3 not containing an ionic group (terminal OM group), were charged instead of the oligomer a1 not containing an ionic group (terminal OM group). The number-average molecular weight was 16,000. The number-average molecular weight of the oligomer a3' not containing an ionic group was obtained as 15,400 (subtracting the linker moiety (molecular weight of 630)).

(Synthesis of oligomer a4 containing an ionic group, represented by the general formula (G4))

The oligomer a4 containing an ionic group (terminal OM group), represented by the formula (G4) was obtained by the method of Example 1 except that the charge quantity of 3,3'-difulfornate-4,4'-difluorobenzophenone was changed to 40.1 g (95 mmol). The number-average molecular weight was 21,000.

(Synthesis of block copolymer b2 containing: oligomer a4 as the segment (A1) containing an ionic group; oligomer a3 as the segment (A2) not containing an ionic group; and octafluorobiphenylene as the linker moiety)

The block copolymer b2 was obtained by the method of Example 1 except that the oligomer a2 containing an ionic group (terminal OM group), was changed to 21 g (1 mmol) of the oligomer a4 containing an ionic group (terminal OM group), and that the oligomer a1' not containing an ionic group (terminal fluoro group), was changed to 16 g (1 mmol) of the oligomer a3' not containing an ionic group (terminal fluoro group). The weight-average molecular weight was 410,000.

The block copolymer b2 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b2 was dissolved, through the use of the method of Example 1.

The ion-exchange capacity derived from the neutralization titration was 1.5 meq/g, and the molar composition ratio (A1/A2) obtained from $^1$H-NMR was 45 mole/55 mole = 0.82, which showed no residual ketal group. The sum of the segment (A1) containing an ionic group and the segment (A2) not containing an ionic group, being contained in the block copolymer, derived from GPC and $^1$H-NMR was 4.9. Thus obtained polymer electrolyte membrane gave the crystallization peak by DSC (first cycle of temperature rise stage), giving the crystallization heat quantity of 28.2 J/g. In addition, no crystallization peak was confirmed in the wide-angle X-ray diffractometry (degree of crystallinity 0%). The electrolyte membrane was extremely tough, and through visual observation, the membrane was found to be a transparent and homogeneous membrane. The proton conductivity was 190 mS/cm at 80°C and 85% RH, and 0.8 mS/cm at 80°C and 25% RH, which showed excellent proton conductivity under low-humidification conditions. Furthermore, the dimensional change rate was also small, giving 5%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 33 nm.

Example 3

(Synthesis of oligomer a5' not containing an ionic group, represented by the general formula (G3))

The oligomer a5 not containing an ionic group (terminal OM group), was synthesized by the method of Example 1 except that the charge quantity of 4,4'-difluorobenzophenone was changed to 21.4 g (Aldrich reagent, 98 mmol). The number-average molecular weight was 20,000.

The oligomer a5' not containing an ionic group (terminal fluoro group), represented by the formula (G3) was synthesized by the method of Example 1 except that 40.0 g (2 mmol) of the oligomer a5 not containing an ionic group (terminal OM group), were charged instead of the oligomer a1 not containing an ionic group (terminal OM group). The number-average molecular weight was 21,000. The number-average molecular weight of the oligomer a5' not containing an ionic group was obtained as 20,400 (subtracting the linker moiety (molecular weight of 630)).

(Synthesis of oligomer a6 containing an ionic group, represented by the general formula (G4))

The oligomer a6 containing an ionic group (terminal OM group), represented by the formula (G4) was synthesized by the method of Example 1 except that the charge quantity of 3,3'-disulfonate-4,4'-difluorobenzophenone was changed to 41.4 g (98 mmol) and that bisphenol was changed to 25.8 g (100 mmol) of K-DHBP. The number-average molecular weight was 26,000.

(Synthesis of block copolymer b3 containing: oligomer a6 as the segment (A1) containing an ionic group; oligomer a5 as the segment (A2) not containing an ionic group; and octafluorobiphenylene as the linker moiety)

The block copolymer b3 was obtained by the method of Example 1 except that the oligomer a2 containing an

ionic group (terminal OM group), was changed to 26 g (1 mmol) of the oligomer a6 containing an ionic group (terminal OM group), and that the oligomer a1' not containing an ionic group (terminal fluoro group), was changed to 21 g (1 mmol) of the oligomer a5' not containing an ionic group (terminal fluoro group). The weight-average molecular weight was 380,000.

The block copolymer b3 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b3 was dissolved, through the use of the method of Example 1.

The ion-exchange capacity obtained from the neutralization titration was 1.9 meq/g, and the molar composition ratio (A1/A2) derived from $^1$H-NMR was 50 mole/50 mol = 0.92, which showed no residual ketal group. The sum of the segment (A1) containing an ionic group and the segment (A2) not containing an ionic group, being contained in the block copolymer, derived from GPC and $^1$H-NMR was 4.7. Thus obtained polymer electrolyte membrane gave the crystallization peak by DSC (first cycle of temperature rise stage), giving the crystallization heat quantity of 30.2 J/g. In addition, no crystallization peak was confirmed in the wide-angle X-ray diffractometry (degree of crystallinity 0%). The electrolyte membrane was extremely tough, and through visual observation, the membrane was found to be a transparent and homogeneous membrane. The proton conductivity was 290 mS/cm at 80°C and 85% RH, and 4 mS/cm at 80°C and 25% RH, which showed excellent proton conductivity under low-humidification conditions. Furthermore, the dimensional change rate was small, giving 12%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 49 nm.

Example 4

(Synthesis of block copolymer b4 containing: oligomer a4 as the segment (A1) containing an ionic group; oligomer a1 as the segment (A2) not containing an ionic group; and octafluorobiphenylene as the linker moiety)

The block copolymer b4 was obtained by the method of Example 1 except that the oligomer a2 containing an ionic group (terminal OM group), was changed to 21 g (1 mmol) of the oligomer a4 containing an ionic group (terminal OM group). The weight-average molecular weight was 350,000.

The block copolymer b4 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b4 was dissolved, through the use of the method of Example 1.

The ion-exchange capacity derived from the neutralization titration was 2.1 meq/g, and the molar composition ratio (A1/A2) obtained from $^1$H-NMR was 53 mole/47 mol = 1.13, which showed no residual ketal group. The sum of the segment (A1) containing an ionic group and the segment (A2) not containing an ionic group, being contained in the block copolymer, obtained from GPC and $^1$H-NMR was 5.1. Thus obtained polymer electrolyte membrane gave the crystallization peak by DSC (first cycle of temperature rise stage), giving the crystallization heat quantity of 24.0 J/g. In addition, no crystallization peak was confirm

ed in the wide-angle X-ray diffractometry, (degree of crystallinity 0%). The electrolyte membrane was extremely tough, and through visual observation, the membrane was found to be a transparent and homogeneous membrane. The proton conductivity was 350 mS/cm at 80°C and 85% RH, and 3 mS/cm at 80°C and 25% RH, which showed excellent proton conductivity under low-humidification conditions. Furthermore, the dimensional change rate was small, giving 13%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 30 nm.

Example 5

(Synthesis of oligomer a7 containing an ionic group, represented by the general formula (G4))

The oligomer a7 containing an ionic group (terminal OM group), represented by the formula (G4), was obtained

by the method of Example 1 except that the charge quantity of 3,3'-disulfonate-4,4'-difluorobenzophenone was changed to 44.7 g (106 mmol). The number-average molecular weight was 40,000.

(Synthesis of block copolymer b5 containing: oligomer a7 as the segment (A1) containing an ionic group; oligomer a1 as the segment (A2) not containing an ionic group; and octafluorobiphenylene as the linker moiety)

The block copolymer b5 was obtained by the method of Example 1 except that the oligomer a2 containing an ionic group (terminal OM group), was changed to 40 g (1 mmol) of the oligomer a7 containing an ionic group (terminal OM group). The weight-average molecular weight was 380,000.

The block copolymer b5 contained 50 mol% of constituent unit represented by the general formula (S1) as the segment (A1) containing an ionic group, and 100 mol% of constituent unit represented by the general formula (S2) as the segment (A2) not containing an ionic group.

1 A polymer electrolyte membrane was formed using a solution of 25% by weight of N-methylpyrrolidone (NMP) in which the obtained block copolymer b5 was dissolved, through the use of the method of Example 1.

The ion-exchange capacity derived from the neutralization titration was 2.7 meq/g, and the molar composition ratio (A1/A2) obtained from $^{1}$H-NMR was 74 mole/26 mol = 2.85, which showed no residual ketal group. The sum of the segment (A1) containing an ionic group and the segment (A2) not containing an ionic group, being contained in the block copolymer, obtained from GPC and $^{1}$H-NMR was 4.3. Thus obtained polymer electrolyte membrane gave the crystallization peak by DSC (first cycle of temperature rise stage), giving the crystallization heat quantity of 25.2 J/g. In addition, no crystallization peak was confirmed in the wide-angle X-ray diffractometry (degree of crystallinity 0%). The electrolyte membrane was extremely tough, and through visual observation, the membrane was found to be a transparent and homogeneous membrane. The proton conductivity was 520 mS/cm at 80°C and 85% RH, and 3 mS/cm at 80°C and 25% RH, which showed excellent proton conductivity under low-humidification conditions. Furthermore, the dimensional change rate was relatively small, giving 20%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 55 nm.

Example 6

(Synthesis of oligomer a8' not containing an ionic group, represented by the general formula (G5))

[Chemical formula 29]

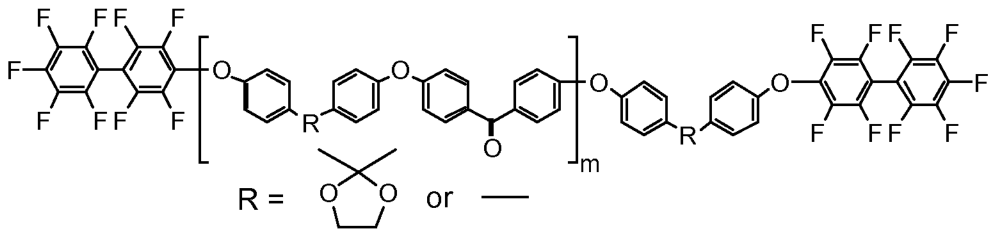

(G5)

where, in the formula, m is a positive integer.

The oligomer a8 not containing an ionic group (terminal OM group), was synthesized by the method of Example 1 except that the charge quantity 25.8 g (100 mmol) of K-DHBP was changed to 12.9 g (50 mmol) of K-DHBP and 9.3 g (50 mmol) of 4,4'-biphenol. The number-average molecular weight was 10,000.

The oligomer a8' not containing an ionic group (terminal fluoro group), represented by the formula (G5) was synthesized by the method of Example 1 except that 20.0 g (2 mmol) of the oligomer a8 not containing an ionic group (terminal OM group), was charged instead of the oligomer a1 not containing an ionic group (terminal OM group). The number-average molecular weight was 11,000. The number-average molecular weight of the oligomer a8' not containing an ionic group was derived to 10,400 (subtracting the linker moiety (630 of molecular weight)).

(Synthesis of block copolymer b6 containing: oligomer a2 as the segment (A1) containing an ionic group; oligomer a8' as the segment (A2) not containing an ionic group; and octafluorobiphenylene as the linker moiety)

The block copolymer b6 was obtained by the method of Example 1 except that the oligomer a1' not containing an ionic group (terminal fluoro group), was changed to 11 g (1 mmol) of the oligomer a8' not containing an ionic group (terminal fluoro group). The weight-average molecular weight was 210,000.

The block copolymer b6 contained 50 mol% of constituent unit represented by the general formula (S1) as the segment (A1) containing an ionic group, and 50 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b6 was dissolved, through the use of the method of Example 1.

The ion-exchange capacity obtained from the neutralization titration was 1.7 meq/g, and the molar composition ratio (A1/A2) derived from $^{1}$H-NMR was 48 mole/52 mol = 0.92, which showed no residual ketal group. The sum of the segment (A1) containing an ionic group and the segment (A2) not containing an ionic group, being contained in the block copolymer, obtained from GPC and $^{1}$H-NMR was 3.1. Thus obtained polymer electrolyte membrane gave the crystallization peak by DSC (first cycle of temperature rise stage), giving the crystallization heat quantity of 20.5 J/g. In addition, no crystallization peak was confirmed in the wide-angle X-ray diffractometry, (degree of crystallinity 0%). The electrolyte membrane was extremely tough, and through visual observation, the membrane was found to be a transparent and homogeneous membrane. The proton conductivity was 220 mS/cm at 80°C and 85% RH, and 1 mS/cm at 80°C and 25% RH, which showed excellent proton conductivity under low-humidification conditions. Furthermore, the dimensional change rate was relatively small, giving 21%, which showed excellent hot water resistance.

Moreover, through TEM and TEM tomography observation, the lamellar phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 23 nm.

Example 7

(Synthesis of oligomer a9' not containing an ionic group, represented by the general formula (G6))

[Chemical formula 30]

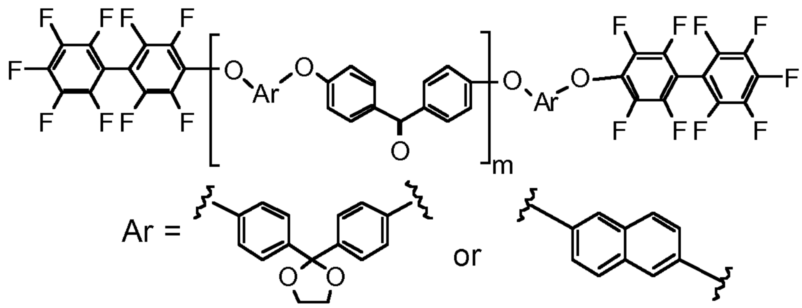

(G6)

where, in the formula, m is a positive integer.

The oligomer a9 not containing an ionic group (terminal OM group), was synthesized by the method of Example 1 except that the charge quantity 25.8 g (100 mmol) of K-DHBP was changed to 12.9 g (50 mmol) of K-DHBP and 8.0 g (50 mmol) of 2,6-dihydroxynaphthalene (manufactured by Tokyo Chemical Industry Co.) The number-average molecular weight was 10,000.

The oligomer a9' not containing an ionic group (terminal fluoro group), represented by the formula (G6) was synthesized by the method of Example 1 except that 20.0 g (2 mmol) of the oligomer a9 not containing an ionic group (terminal OM group), were charged instead of the oligomer a1 not containing an ionic group (terminal OM group). The number-average molecular weight was 11,000. The number-average molecular weight of the oligomer a9' not containing an ionic group was derived to 10,400 (subtracting the linker moiety (molecular weight of 630)).

(Synthesis of block copolymer b7 containing: oligomer a2 as the segment (A1) containing an ionic group; oligomer a9' as the segment (A2) not containing an ionic group; and octafluorobiphenylene as the linker moiety)

The block copolymer b7 was obtained by the method of Example 1 except that the oligomer a1' not containing an ionic group (terminal fluoro group), was changed to 11 g (1 mmol) of the oligomer a9' not containing an ionic group (terminal fluoro group). The weight-average molecular weight was 200,000.

The block copolymer b7 contained 50 mol% of constituent unit represented by the general formula (S1) as the segment (A1) containing an ionic group, and 50 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b7 was dissolved, through the use of the method of Example 1.

The ion-exchange capacity obtained from the neutralization titration was 1.7 meq/g, and the molar composition ratio (A1/A2) obtained from $^1$H-NMR was 48 mole/52 mol = 0.92, which showed no residual ketal group. The sum of the segment (A1) containing an ionic group and the segment (A2) not containing an ionic group, being contained in the block copolymer, obtained from GPC and $^1$H-NMR was 3.2. Thus obtained polymer electrolyte membrane gave the crystallization peak by DSC (first cycle of temperature rise stage), giving the crystallization heat quantity of 23.5 J/g. In addition, no crystallization peak was confirmed in the wide-angle X-ray diffractometry (degree of crystallinity 0%). Accordingly, the electrolyte membrane was extremely tough, and through visual observation, the membrane was found to be a transparent and homogeneous membrane. The proton conductivity was 225 mS/cm at 80°C and 85% RH, and 1 mS/cm at 80°C and 25% RH, which showed excellent proton conductivity under low-humidification conditions. Furthermore, the dimensional change rate was relatively small, giving 20%, which showed excellent hot water resistance.

Moreover, through TEM and TEM tomography observation, the lamellar phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 20 nm.

Example 8

(Synthesis of oligomer a10 containing an ionic group, represented by the general formula (G7))

[Chemical formula 31]

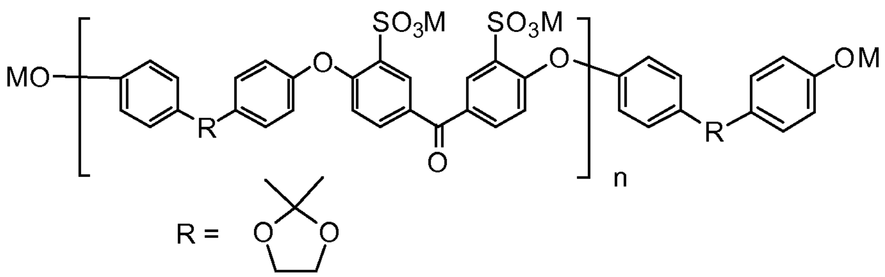

(G7)

where, in the formula (G7), M is Na or K, and n is a positive integer.

The oligomer a10 not containing an ionic group (terminal OM group), represented by the formula (G7), was obtained by the method of Example 1 except that the charge quantity of 12.9 g (50 mmol) of K-DHBP and 9.3 g (50 mmol) of 4,4'-biphenol was changed to 25.8 g (100 mmol) of K-DHBP. The number-average molecular weight was 16,000.

(Synthesis of block copolymer b8 containing: oligomer a10 as the segment (A1) containing an ionic group; oligomer a1 as the segment (A2) not containing an ionic group; and octafluorobiphenylene as the linker moiety)

The block copolymer b8 was obtained by the method of Example 1 except that the oligomer a2 containing an ionic group (terminal OM group), was changed to 16 g (1 mmol) of the oligomer a10 containing an ionic group (terminal OM group). The weight-average molecular weight was 350,000.

The block copolymer b8 contained 100 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b8 was dissolved, through the use of the method of Example 1.

The ion-exchange capacity obtained from the neutralization titration was 1.8 meq/g, and the molar composition ratio (A1/A2) obtained from $^1$H-NMR was 49 mole/51 mol = 0.96, which showed no residual ketal group. The sum of the segment (A1) containing an ionic group and the segment (A2) not containing an ionic group, being contained in the block copolymer, obtained from GPC and $^1$H-NMR was 5.4. Thus obtained polymer electrolyte membrane gave the crystallization peak by DSC (first cycle of temperature rise stage), giving the crystallization heat quantity of 27.1 J/g. In addition, no crystallization peak was confirmed in the wide-angle X-ray diffractometry, (degree of crystallinity 0%). The electrolyte membrane was extremely tough, and through visual observation, the membrane was found to be a transparent and homogeneous membrane. The proton conductivity was 235 mS/cm at 80°C and 85% RH, and 2 mS/cm at 80°C and 25% RH, which showed excellent proton conductivity under low-humidification conditions. Furthermore, the dimensional change rate was relatively small, giving 10%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 17 nm.

Example 9

(Synthesis of oligomer a11 containing an ionic group, represented by the general formula (G4))

The oligomer a11 containing an ionic group (terminal OM group), represented by the general formula (G4), was obtained by the method of Example 1 except that the charge quantity of 3,3'-disulfonate-4,4'-difluorobenzophenone was changed to 37.5 g (89 mmol). The number-average molecular weight was 5,000.

(Synthesis of block copolymer b9 containing: oligomer a11 as the segment (A1) containing an ionic group; oligomer a5 as the segment (A2) not containing an ionic group; and octafluorobiphenylene as the linker moiety)

The block copolymer b9 was obtained by the method of Example 1 except that the oligomer a2 containing an ionic group (terminal OM group), was changed to 5 g (1 mmol) of the oligomer a11 containing an ionic group containing an ionic group (terminal OM group), and that the oligomer a1' not containing an ionic group (terminal fluoro group), was changed to 20 g (1 mmol) of the oligomer a5' not containing an ionic group (terminal fluoro group). The weight-average molecular weight was 340,000.

The block copolymer b9 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b9 was dissolved, through the use of the method of Example 1.

The ion-exchange capacity obtained from the neutralization titration was 0.8 meq/g, and the molar composition ratio (A1/A2) obtained from $^1$H-NMR was 15 mole/85 mol = 0.17, which showed no residual ketal group. The sum of the segment (A1) containing an ionic group and the segment (A2) not containing an ionic group, being contained in the block copolymer, obtained from GPC and $^1$H-NMR was 7.1. Thus obtained polymer electrolyte membrane gave the crystallization peak by DSC (first cycle of temperature rise stage), giving the crystallization heat quantity of 35.1 J/g. In addition, no crystallization peak was confirmed in the wide-angle X-ray diffractometry, (degree of crystallinity 0%). The electrolyte membrane was extremely tough, and through visual observation, the membrane was found to be a transparent and homogeneous membrane. The proton conductivity was 80 mS/cm at 80°C and 85% RH, and 0.5 mS/cm at 80°C and 25% RH. Furthermore, the dimensional change rate was small, giving 3%, which showed excellent hot water resistance.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated the autocorrelation function given by the TEM image processing was 45 nm.

Example 10

(Synthesis of oligomer a12' not containing an ionic group, represented by the general formula (G3))

The oligomer a12 not containing an ionic group (terminal OM group), was synthesized by the method of Example 1 except that the charge quantity of 4,4'-difluorobenzophenone was changed to 20.1 g (Aldrich reagent, 92 mmol). The

number-average molecular weight was 6,000.

Furthermore, the oligomer a12' not containing an ionic group (terminal fluoro group), represented by the formula (G3) was synthesized by the method of Example 1 except that 12.0 g (2 mmol) of the oligomer a12 not containing an ionic group (terminal OM group), was charged instead of the oligomer a1 not containing an ionic group (terminal OM group). The number-average molecular weight was 7,000. The number-average molecular weight of the oligomer a12' not containing an ionic group was derived to 6,400 (subtracting the linker moiety (630 of molecular weight)).

(Synthesis of block copolymer b10 containing: oligomer a7 as the segment (A1) containing an ionic group; oligomer a12' as the segment (A2) not containing an ionic group; and octafluorobiphenylene as the linker moiety)

The block copolymer b10 was obtained by the method of Example 1 except that the oligomer a2 containing an ionic group (terminal OM group), was changed to 40 g (1 mmol) of the oligomer a7 containing an ionic group (terminal OM group), and that the oligomer a1' not containing an ionic group (terminal fluoro group), was changed to 6 g (1 mmol) of the oligomer a12' not containing an ionic group (terminal fluoro group). The weight-average molecular weight was 350,000.

The block copolymer b10 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b10 was dissolved, through the use of the method of Example 1.

The ion-exchange capacity obtained from the neutralization titration was 3.1 meq/g, and the molar composition ratio (A1/A2) obtained from $^1$H-NMR was 83 mole/17 mol = 4.8, which showed no residual ketal group. The sum of the segment (A1) containing an ionic group and the segment (A2) not containing an ionic group, being contained in the block copolymer, obtained from GPC and $^1$H-NMR was 6.5. Thus obtained polymer electrolyte membrane gave the crystallization peak by DSC (first cycle of temperature rise stage), giving the crystallization heat quantity of 20.1 1 J/g. In addition, no crystallization peak was confirmed in the wide-angle X-ray diffractometry (degree of crystallinity 0%). The electrolyte membrane was extremely tough, and through visual observation, the membrane was found to be a transparent and homogeneous membrane. The proton conductivity was 470 mS/cm at 80°C and 85% RH, and 1 mS/cm at 80°C and 25% RH, which showed excellent proton conductivity under low-humidification conditions. Furthermore, the dimensional change rate was 60%, which showed excellent hot water resistance in spite of high ion-exchange capacity.

Moreover, through TEM and TEM tomography observation, the co-continuous phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 70 nm.

Comparative Example 1

(Synthesis of oligomer a13' not containing an ionic group, represented by the general formula (G3))

The oligomer a13 not containing an ionic group (terminal OM group), was synthesized by the method of Example 1 except that the charge quantity of 4,4'-difluorobenzophenone was changed to 19.9 g (Aldrich reagent, 91 mmol). The number-average molecular weight was 5,000.

Furthermore, the oligomer a13' not containing an ionic group (terminal fluoro group), represented by the formula (G3) was synthesized by the method of Example 1 except that 10.0 g (2 mmol) of the oligomer a13 not containing an ionic group (terminal OM group), was charged instead of the oligomer a1 not containing an ionic group (terminal OM group). The number-average molecular weight was 6,000. The number-average molecular weight of the oligomer a13' not containing an ionic group was derived to 5,400 (subtracting the linker moiety (molecular weight of 630)).

(Synthesis of block copolymer b11 containing: oligomer a7 as the segment (A1) containing an ionic group; oligomer a13' as the segment (A2) not containing an ionic group; and octafluorobiphenylene as the linker moiety)

The block copolymer b11 was obtained by the method of Example 1 except that the oligomer a2 containing an ionic group (terminal hydroxyl group), was changed to 40 g (1 mmol) of the oligomer a7 containing an ionic group (terminal hydroxyl group), and that the oligomer a1' not containing an ionic group (terminal fluoro group), was changed to 5 g (1 mmol) of the oligomer a13' not containing an ionic group (terminal fluoro group). The weight-average molecular weight was 200,000.

The block copolymer b11 contained 50 mol% of constituent unit represented by the general formula (S1) as the segment (A1) containing an ionic group, and 100 mol% of constituent unit represented by the general formula (S2)

as the segment (A2) not containing an ionic group.

A polymer electrolyte membrane was formed using a solution of 25% by weight of N-methylpyrrolidone (NMP) in which the obtained block copolymer b11 was dissolved, through the use of the method of Example 1.

The ion-exchange capacity obtained from the neutralization titration was 3.0 meq/g, and the molar composition ratio (A1/A2) obtained from $^1$H-NMR was 84 mole/16 mol = 5.25, which showed no residual ketal group. The sum of the segment (A1) containing an ionic group and the segment (A2) not containing an ionic group, being contained in the block copolymer, obtained from GPC and $^1$H-NMR was 2.3. Thus obtained polymer electrolyte membrane gave the crystallization peak by DSC (first cycle of temperature rise stage), giving the crystallization heat quantity of 16.3 J/g. In addition, no crystallization peak was confirmed in the wide-angle X-ray diffractometry, (degree of crystallinity 0%). The electrolyte membrane was soft and brittle, and through visual observation, the membrane was found to be a transparent and homogeneous membrane. The proton conductivity was 400 mS/cm at 80°C and 85% RH, and 0.2 mS/cm at 80°C and 25% RH, which showed inferior proton conductivity under low-humidification conditions to that of Examples 1 to 10. Furthermore, the dimensional change rate was large, giving 80%, and showed poor hot water resistance.

Through TEM and TEM tomography observation, on one plane of the three-planes of digital slice, the hydrophobic domain not containing an ionic group did not form the continuous phase, and a cylinder-pattern phase-separated structure could be confirmed. In addition, the cycle length of the phase-separated structure estimated from the autocorrelation function given by the TEM image processing was 100 nm.

Comparative Example 2

(Synthesis of oligomer a14 containing an ionic group, represented by the general formula (G4))

The oligomer a14 containing an ionic group (terminal OM group), represented by the formula (G4) was obtained by the method of Example 1 except that the charge quantity of 3,3'-difulfornate-4,4'-difluorobenzophenone was changed to 38.0 g (90 mmol). The number-average molecular weight was 6,000.

(Synthesis of block copolymer b12 containing: oligomer a14 as the segment (A1) containing an ionic group; oligomer a5 as the segment (A2) not containing an ionic group; and octafluorobiphenylene as the linker moiety)

The block copolymer b12 was obtained by the method of Example 1 except that the oligomer a2 containing an ionic group (terminal OM group), was changed to 6 g (1 mmol) of the oligomer a14 containing an ionic group (terminal OM group), and that the oligomer a1' not containing an ionic group (terminal fluoro group), was changed to 20 g (1 mmol) of the oligomer a5' not containing an ionic group (terminal fluoro group). The weight-average molecular weight was 210,000.

The block copolymer b12 contained 50 mol% of constituent unit represented by the general formula (S1) as the segment (A1) containing an ionic group, and 100 mol% of constituent unit represented by the general formula (S2) as the segment (A2) not containing an ionic group.

A polymer electrolyte membrane was formed using a solution of 25% by weight of N-methylpyrrolidone (NMP) in which the obtained block copolymer b12 was dissolved, through the use of the method of Example 1.

The ion-exchange capacity obtained from the neutralization titration was 0.5 meq/g, and the molar composition ratio (A1/A2) obtained from $^1$H-NMR was 11 mole/89 mol = 0.12, which showed no residual ketal group. The sum of the segment (A1) containing an ionic group and the segment (A2) not containing an ionic group, being contained in the block copolymer, obtained from GPC and $^1$H-NMR was 2.1. Thus obtained polymer electrolyte membrane gave the crystallization peak by DSC (first cycle of temperature rise stage), giving the crystallization heat quantity of 32.8 8 J/g. In addition, no crystallization peak was confirmed in the wide-angle X-ray diffractometry, (degree of crystallinity 0%). The electrolyte membrane was rigid, and through visual observation, the membrane was found to be a cloudy membrane. The proton conductivity was 50 mS/cm at 80°C and 85% RH, and 0.05 mS/cm at 80°C and 25% RH, which showed inferior proton conductivity to that of Examples 1 to 10. Furthermore, the dimensional change rate was small, giving 5%, which showed excellent hot water resistance.

Through the TEM and TEM tomography observation, on all planes of the three-planes of digital slice, the hydrophilic domain containing an ionic group did not form the continuous phase, and a sea-island-pattern phase-separated structure could be confirmed. In addition, the cycle length of the phase-separated structure estimated from the autocorrelation function given by the TEM image processing was 250 nm.

Comparative Example 3

Various characteristics were evaluated using commercially available Nafion (registered trade name) NRE211CS membrane (manufactured by DuPont). Through both DSC (first cycle of temperature rise stage) and the wide-angle X-ray diffractometry, crystallization and crystallization peak were not confirmed (degree of crystallinity 0%). The ion-exchange capacity determined by the neutralization titration was 0.9 meq/g. Through visual observation, the membrane was found to be a transparent and homogeneous membrane, and through the TEM observation, a clear phase-separated structure was not confirmed. The proton conductivity was 100 mS/cm at 80°C and 85% RH, and 3 mS/cm at 80°C and 25% RH. In addition, when the membrane was immersed in hot water, vigorous swelling occurred and the membrane was difficult in handling and in some cases, was broken when grasped.

Comparative Example 4

Using the method described in Japanese Patent Laid-Open No. 2011-23308, a polysulfidesulfone-based block copolymer was synthesized. First, 25 g (0.15 mol) of diphenylether were weighed into an eggplant-shape flask, to which 60 mL (0.44 mol) of chlorosulfuric acid were gradually added, and the resultant mixture was agitated at room temperature for 2 hours. After the completion of the reaction, the reaction solution was allowed to stand to be cooled to room temperature. Then, the entire solution was poured in 600 mL of ice-water and a white precipitate was formed. The precipitate was filtered for collection, which was then rinsed with water, followed by drying under a reduced pressure for 7 hours at 80°C, and thus there was obtained a crude product of oxo-bis-benzenesulfonyl chloride.

Thus obtained 8.5 g (0.023 mol) of crude oxo-bis-benzenesulfonyl chloride and 50 g (0.76 mol) of zinc powder were charged in an eggplant-shape flask, to which 200 mL of water and 55 mL (1 mol) of sulfuric acid were added, and the solution was agitated for 2 hours at room temperature, followed by agitating at 130°C for 3 hours. After completing the reaction, the reaction solution was allowed to stand to cool to room temperature. Then, diethylether was added to the reaction solution to remove the aqueous layer. After that, the organic layer was dried by magnesium sulfate, and was concentrated under a reduced pressure to obtain the target crude product. The crude product was recrystallized using methanol, thus obtaining 3.7 g of oxo-bis-benzenethiol as white crystals.

To a two-neck flask containing 1.38 g (5.51 mmol) of 4,4'-thiobisbenzenethiol, 1.63 g (5.58 mmol) of 4, 4' -dichlorodiphenylsulfone, and 0. 99 g (7. 16 mmol) of potassium carbonate, there was added 5 mL of dimethylacetamide (DMAc) under nitrogen atmosphere. The mixture was heated to 175°C, and agitated for 1 hour, thus preparing a hydrophobic-portion oligomer.

To a two-neck flask containing 0.155 g (0.62 mmol) of 4,4'-thiobisbenzenethiol, 0.284 g (0.58 mmol) of 4,4'-dichlorodiphenylsulfone-3,3'-sodium sulfonate , and 0.257 g (1.86 mmol) of potassium carbonate, there was added 1 mL of DMAc under nitrogen atmosphere. The mixture was heated to 175°C, and agitated for 1 hour, and thus there was prepared a hydrophilic-portion oligomer.

To thus prepared hydrophilic-portion oligomer polymerization solution, 8 mL of DMAc were added to dilute it, and the solution was poured in a flask that contained the entire volume of the prepared hydrophobic-portion oligomer. The system atmosphere was fully substituted with nitrogen, and was caused to polymerize under a heating condition of 175°C for 36 hours. After completing the polymerization, DMAc was added to dilute the reaction solution, which was then filtered to remove insoluble matter. The filtrate was concentrated, and was poured in isopropyl alcohol to precipitate the polymer. After collecting the polymer by filtration, the polymer was purified by dialysis, thus obtaining a multiple block polymer (MBsPSS-PSS-50) of sulfonated polysulfidesulfone-hydrophilic-portion (sPSS)-polysulfidesulfone-hydrophobic-portion (PSS). The percentage of the hydrophilic-portion in the obtained multiple block polymer was 50 mol%, and the sum of the segment (A1) containing an ionic group and the segment (A2) not containing an ionic group, being contained in the block polymer, determined by GPC and $^1$H-NMR was 4.

To the MBsPSS-PSS-50 obtained above, NMP was added to prepare a 20%-by-weight solution. The solution was cast on a glass plate, which was then dried under a reduced pressure at 60°C for 1 hour, and 50°C for 4 hours, thus obtaining a MBsPSS-PSS(-$SO_3$Na) membrane. The membrane was immersed in 1N hydrochloric acid for 1 day, and then was rinsed with ion-exchanged water. Furthermore, the membrane was immersed in ion-exchanged water for 1 day and the sodium sulfonate in the membrane was converted into proton, and thus there was obtained the MBsPSS-PSS-50 membrane.

The ion-exchange capacity obtained from the neutralization titration was 1.9 meq/g. The obtained polymer electrolyte membrane showed no crystallinity and no crystallization peak (amorphous), in both DSC (first cycle of temperature rise stage) and the wide-angle X-ray diffractometry. The electrolyte membrane was rigid and brittle, and through visual observation, the membrane was found to be an opaque and non-homogeneous membrane. The proton conductivity was 160 mS/cm at 80°C and 85% RH, and 0.1 mS/cm at 80°C and 25% RH, which showed inferior proton conductivity under low-humidification conditions to that of Examples 1 to 10. The dimensional change rate was large, giving 80%, which showed poor hot water resistance.

TEM and TEM tomography observation confirmed the co-continuous phase-separated structure. Both the hydrophilic domain containing an ionic group and the hydrophobic domain not containing an ionic group formed a continuous phase. The cycle length of the phase-separated structure estimated from the autocorrelation function given by the TEM image processing was 22 nm.

Comparative Example 5

Using the method described in Japanese Patent Laid-Open No. 2005-126684, a polyethersulfone-based block copolymer having linker was synthesized. First, to a single-neck eggplant-shape flask equipped with a Dean-Stark tube, there were added 4.31 g (15.0 mmol) of 4,4'-dichlorodiphenylsulfone, 3.05 g (16.4 mmol) of 4,4'-biphenol, 3.39 g (24.5 mmol) of potassium carbonate, 35 mL of NMP, and 20 mL of toluene, under nitrogen atmosphere. The solution was kept at 150°C for 2 hours to remove water in the system as azeotrope. Then, the solution was heated to 180°C to conduct reaction for 12 hours. After allowing the reaction solution to stand to cool, the reaction solution was poured in water to generate precipitate. After filtering the mixture, methanol rinsing was applied. By drying the product under a reduced pressure at 100°C, a hydrophobic oligomer having OH group at both terminals was obtained.

To a flask equipped with an azeotropic distillation column, there were added 100 g of the hydrophobic oligomer, 0.759 g of potassium carbonate, 250 mL of DMAc, and 50 mL of toluene, under nitrogen atmosphere. The solution was agitated at 160 °C and water as azeotrope was removed. After being allowed to stand to cool the reaction solution at room temperature, 5.36 g of decafluorobiphenyl were added thereto, and the solution was then agitated at 80°C for 3.5 hours. The solution was dripped onto a large volume of water to generate precipitate. After filtering the mixture to collect the precipitate, the precipitate was rinsed with a methanol/acetone mixed solvent, which was then dried at 80°C to obtain a hydrophobic oligomer of fluorine-terminal type.

To a flask equipped with an azeotropic distillation column, there were added 1.52 g (8.16 mmol) of 4,4'-dihyroxybiphenyl, 3. 92 g (7.99 mmol) of 4,4'-difluorodiphenylsulfone-3,3'-dipotassiumdisulfonate, and 1.24 g (8.97 mmol) of potassium carbonate, under Ar atmosphere. To the solution, there were further added 100 mL of dimethylsulfoxide (DMSO) and 30 mL of toluene. The solution was heated to distil out the toluene at a bath temperature of 140°C to remove the water in the system as azeotrope. By holding the solution for 5 hours at 170°C, a hydrophilic oligomer was obtained. Then, the reaction solution was allowed to stand to cool to room temperature, and 6.7 g of the synthesized hydrophobic oligomer with fluorine-terminal were added to the solution, which was agitated while holding the temperature of 80°C for 10 hours. After allowing the reaction solution to stand to cool, the solution was dripped onto a large volume of aqueous solution of hydrochloric acid. The generated precipitate was filtered for collection. Further rinse-filtration with water was repeated until the rinsed liquid became neutral, and then the precipitate was dried under a reduced pressure at 60°C, thus obtaining 9.43 g of block copolymer. The sum of the segment (A1) containing an ionic group and the segment (A2) not containing an ionic group, being contained in the block copolymer, obtained from GPC and $^1$H-NMR was 5.1.

A polymer electrolyte membrane was formed by the method of Example 1 in which the obtained block copolymer was dissolved in NMP. The ion-exchange capacity obtained from the neutralization titration was 1.8 meq/g. Through both DSC (first cycle of temperature rise stage) and the wide-angle X-ray diffractometry, crystallization and crystallization peak were not confirmed (amorphous) in the obtained polymer electrolyte membrane. Although the electrolyte membrane was hard and brittle, through visual observation, the membrane was found to be a transparent and homogeneous membrane. The proton conductivity was 140 mS/cm at 80°C and 85% RH, and 0.3 mS/cm at 80°C and 25% RH, which showed inferior proton conductivity under low-humidification conditions to that of Examples 1 to 10. The dimensional change rate was large, giving 55%, and showed poor hot water resistance.

Furthermore, through TEM and TEM tomography observation, the lamellar phase-separated structure could be confirmed, and both the hydrophilic domain containing an ionic group and the hydrophobic domain not containing an ionic group formed a continuous phase. In addition, the cycle length of the phase-separated structure estimated from the autocorrelation function given by the TEM image processing was 30 nm.

Comparative Example 6

(Synthesis of polyetherketone oligomer c1 not containing an ionic group and ketal group)

A polyetherketone oligomer not containing an ionic group was synthesized by the method of Example 1 except that 25.8 g (100 mmol) of K-DHBP was changed to 21.4 g (100 mmol) of 4,4'-dihydroxybenzophenone (DHBP). From the initial stage of polymerization, polymer deposited, and the polymerization was difficult to continue. Due to the insolubility to solvent, the block polymer polymerization was difficult, and thus the evaluation as the electrolyte membrane could not be performed.

Comparative Example 7

A block polymer not containing linker was synthesized by the method described in Brochure of International Publication No. WO-2008-018487.

[Chemical formula 32]

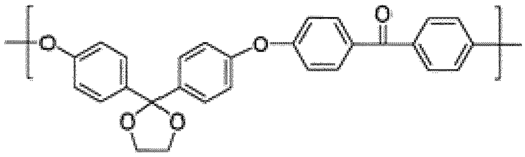

To a 500 mL three neck flask equipped with an agitator, a nitrogen gas inlet tube, and a Dean-Stark trap, there were added 13. 82 g of potassium carbonate (Aldrich reagent, 100 mmol), 20.66 g (80 mmol) of K-DHBP obtained in the Synthesis Example 1, and 17.46 g of 4, 4' -difluorobenzophenone (Aldrich reagent, 80 mmol). After nitrogen purge, the content was dewatered at 180°C in 90 mL of N-methylpyrrolidone (NMP) and 45 mL of toluene. Then, the resultant content was heated and the toluene was removed. The resultant content was polymerized for 1 hour at 230°C. Purification was performed by reprecipitation through the use of a large volume of water, and thus there was obtained a prepolymer represented by the general formula (G8). The weight-average molecular weight was 50,000.

To a 500 mL three neck flask equipped with an agitator, a nitrogen gas inlet tube, and a Dean-Stark trap, there were added 6.91 g of potassium carbonate (Aldrich reagent, 50 mmol), 8.73 g (20 mmol) of the prepolymer, 10.33 g (40 mmol) of K-DHBP obtained in the Synthesis Example 1, 3.49 g of 4,4'-difluorobenzophenone (Aldrich reagent, 16 mmol), and 10.13 g (24 mmol) of disodium 3,3'-disulfonate-4,4'-difluorobenzophenone obtained in the Synthesis Example 2. After nitrogen purge, the resultant content was dewatered at 180°C in 120 mL of N-methylpyrrolidone (NMP) and 45 mL of toluene. Then, the resultant content was heated and the toluene was removed. The resultant content was polymerized for 10 hours at 230°C. Purification was performed by reprecipitation through the use of a large volume of water, and thus there was obtained a block polymer. The number-average molecular weight was 250,000.

The block polymer is constituted by the prepolymer block (S2) having the repeating unit of the general formula (G8) and the block (S1) with repeating unit in which the general formula (G1) is 1, the benzophenone is 0.4, and the disulfonate benzophenone is 0.6.

A polymer electrolyte membrane was formed from a solution of 25% by weight of N-methylpyrrolidone (NMP) in which the obtained block polymer was dissolved, using the method of Example 1. The ion-exchange capacity obtained from the neutralization titration was 1.7 mmol/g, and the molar composition ratio (A1/A2) obtained from $^1$H-NMR was 48 mole/52 mol = 0.92, which showed no residual ketal group.

As to the obtained polymer electrolyte membrane, at the DSC (first cycle of temperature rise stage), a crystallization peak could be observed, and the crystallization heat quantity was found to be 23.0 J/g. Through the wide-angle X-ray diffractometry, crystallization peak could not be observed (degree of crystallinity 0%). The electrolyte membrane was extremely tough, and through visual observation, the membrane was found to be clouded. The proton conductivity was 130 mS/cm at 80°C and 85% RH, and 0.1 mS/cm at 80°C and 25% RH, which was inferior to that of Examples. The dimensional change rate was small, giving 5%, and showed excellent hot water resistance.

Through TEM and TEM tomography observation, the co-continuous and the lamellar phase-separated structures could not be confirmed, and a part of the phase-separated structure was found to be lacking in homogeneity. In addition, the cycle length of the phase-separated structure estimated from the autocorrelation function given by the TEM image processing was 350 nm.

Comparative Example 8

Using the method described in Japanese Patent Laid-Open No. 2005-190830, a polyetherketone ether sulfone-based block copolymer containing sulfonic acid group was synthesized. To a 2 L three-neck flask equipped with an agitator, a thermometer, and a three-way stop cock for a cooling tube, a Dean-Stark tube, and a nitrogen gas inlet tube, there were added 99.4 g (0.46 mol) of 4,4'-dihydroxybenzophenone (4,4'-DHBP), 148.2 g (0.52 mol) of 4,4'-dichlorodiphenylsulfone (4,4'-DCDS), 86.9 g (0.63 mol) of potassium carbonate, 500 mL of 1,3-dimethyl-2-imidazolidinone (DMI) , and 200 mL of toluene. The solution was heated on an oil bath, and reaction was performed at 150°C under nitrogen atmosphere while the solution was agitated. The water generated by the reaction was caused to distill as azeotrope with toluene for removal from the reaction system through the Dean-Stark tube and the reaction was performed for 3 hours. After that, the reaction temperature was gradually increased to 180°C and most of the toluene was removed. The reaction was continued for 8 hours at 180°C, then 9.2 g (0.032 mol) of 4,4'-DCDS were added to the reaction solution and the reaction was further continued for 2 hours. The resulted reaction solution was allowed to stand to be cooled, and the precipitate of inorganic compounds as byproducts was removed by filtration. The filtrate was charged in 4 L of methanol. The precipitated reaction product was filtered for collection, which was then dried and was dissolved in 500 mL of DMI. The solution was added to 4 L of methanol for reprecipitation and 150 g of oligomer were obtained. The number-average molecular weight of thus obtained oligomer, determined by GPC, was 10,000 (in terms of polystyrene

standard).

To a flask, there were added 17.6 g (1.8 mmol) of thus obtained oligomer, 25.4 g (58.4 mmol) of 2,5-dichloro-4'-(4-phenoxy)phenoxybenzophenone (DCPPB), 1.18 g (1.8 mmol) of bis(triphenylphosphine)nickel dichloride, 1.17 g (7.8 mmol) of sodium iodide, 6.30 g (24.0 mmol) of triphenylphosphine, and 9.41 g (144 mmol) of zinc dust. The atmosphere was dry-nitrogen purged. Then 100 mL of N-methyl-2-pyrrolidone were added to the solution for heating to 80°C, and polymerization was performed for 4 hours while the solution was agitated. After having diluted, with NMP, the obtained polymer solution, the solution was filtered by celite. The filtrate was poured into a large excessive volume of methanol 1000 mL, and was solidified for deposition. The solid was filtered for collection, followed by air-drying, and was further dissolved in 200 mL of NMP. The solution was poured into a large excessive volume of methanol, 1500 mL, and was solidified for deposition. The deposit was filtered for collection, and was dried in a vacuum, and thus there were obtained 32.1 g of the target copolymer. The weight-average molecular weight determined by GPC was 170,000 (in terms of polystyrene).

Then 16 g of thus obtained copolymer were charged into a 500 mL separable flask equipped with an agitator and a thermometer. Further 160 mL of 98% sulfuric acid were added. While keeping the temperature in the flask to 25°C, the solution was agitated for 24 hours in nitrogen gas stream. The resultant solution was poured in a large volume of ion-exchanged water for precipitating the polymer. The polymer was repeatedly rinsed until the pH of the rinsed water became 5. Then, the polymer was dried and a polymer containing sulfonic acid group was obtained. The weight-average molecular weight determined by GPC was 200, 000 (in terms of polystyrene).

A polymer electrolyte membrane was formed by the method of Example 1 in which the obtained copolymer containing sulfonic acid group was dissolved in NMP. The ion-exchange capacity obtained from the neutralization titration was 2.0 meq/g. Through both DSC (first cycle of temperature rise stage) and the wide-angle X-ray diffractometry, crystallization and crystallization peak were not confirmed (amorphous) in the obtained polymer electrolyte membrane. The electrolyte membrane was hard and brittle, and through visual observation, the membrane was found to be a transparent and homogeneous membrane. The proton conductivity was 170 mS/cm at 80°C and 85% RH, and 0.07 mS/cm at 80°C and 25% RH, which showed inferior proton conductivity under low-humidification conditions to that of Examples 1 to 10. The dimensional change rate was large, giving 65%, and showed poor hot water resistance.

TEM and TEM tomography observation did not confirm the co-continuous and lamellar phase-separated structures, and found that a part of the phase-separated structure lacked homogeneity. A presumable cause of the phenomenon is that the sulfonation after the polymerization introduces the sulfonic group into a random position in the skeleton of the polymer, which results in wide distribution of the size and the arrangement of hydrophilic domains and hydrophobic domains. The cycle length of the phase-separated structure derived from the autocorrelation function given by the TEM image processing was 220 nm.

Industrial Applicability

The polymer electrolyte membrane according to the present invention is applicable to various electrochemical apparatus (such as fuel cell, water electrolyzer, and chloroalkali electrolyzer). Among these apparatus, use in fuel cell is preferred, and specifically suitable use is for fuel cell utilizing hydrogen as the fuel.

The uses of the polymer electrolyte fuel cell of the present invention are not specifically limited, and preferred uses are: substitution of conventional primary cell or rechargeable cell; and hybrid power sources therewith. These preferred uses include: handy equipment such as cell phone, personal computer, PDA, video camera, and digital camera; household electric appliances such as cordless vacuum cleaner; toys; power source of mobile body such as motor bicycle, motorbike, vehicle (such as automobile, bus, and truck), ship, and railway; and stationary power generator.

Reference Sings List

M1: Co-continuous structure
M2: Lamellar structure
M3: Cylinder structure
M4: Sea-island structure

## Claims

1. A polymer electrolyte membrane comprising a block copolymer containing each one or more of: a segment (A1) containing an ionic group; and a segment (A2) not containing an ionic group, and one or more linker moieties which

are able to connect the segment (A1) with the segment (A2) while suppressing randomization and segment-cutting by the ether-exchange reaction; wherein a number average molecular weight of the segment (A1) is 15,000 or larger; wherein the molar composition ratio of the segment (A1) to the segment (A2), (A1)/(A2), is 0.15 or larger and 5 or smaller; the ionic group is sulfonic acid group; wherein the ion exchange capacity of the block copolymer is 1.4 meq/g or larger; the polymer electrolyte membrane forms a co-continuous or lamellar phase-separated structure; the cycle length of which is 100 nm or smaller; and a crystallization heat quantity determined by differential scanning calorimetry is 0.1 J/g or larger, or a degree of crystallinity determined by wide-angle X-ray diffractometry is 0.5% or larger,

wherein the segment (A1) containing an ionic group contains the constituent unit represented by a general formula (S1) described below,

[Chemical formula 3]

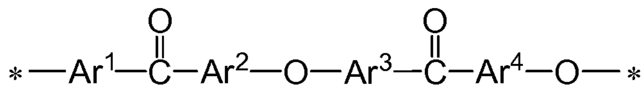

(S1)

where, in the general formula (S1), $Ar^1$ to $Ar^4$ are each an arbitrary divalent arylene group; $Ar^1$ and/or $Ar^2$ contains an ionic group; $Ar^3$ and $Ar^4$ can contain or not contain an ionic group; $Ar^1$ to $Ar^4$ can each be arbitrarily substituted, and in $Ar^1$ to $Ar^4$, two or more kinds of arylene groups can be independently used; and the symbol * signifies a bond moiety with the general formula (S1) or with other constituent unit,

wherein the segment (A1) containing an ionic group contains 20 mol% or more of the constituent unit represented by the general formula (S1),

wherein the segment (A2) not containing an ionic group contains a constituent unit represented by a general formula (S2) described below,

[Chemical formula 2]

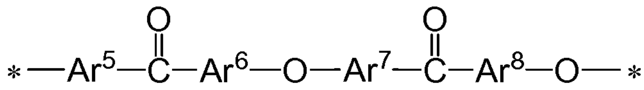

(S2)

where, in the general formula (S2), $Ar^5$ to $Ar^8$ are each an arbitrary divalent arylene group, which can each be arbitrarily substituted, and which do not contain an ionic group; in $Ar^5$ to $Ar^8$, two or more kinds of arylene group can be independently used; and the symbol * signifies a bond moiety with the general formula (S2) or with other constituent unit, and

wherein the segment (A2) not containing an ionic group contains 20 mol% or more of the constituent unit represented by the general formula (S2).

2. The polymer electrolyte membrane according to Claim 1, wherein the block copolymer is an aromatic polyether ketone-based polymer.

3. The polymer electrolyte membrane according to Claim 1, wherein the segment represented by the general formula (S2) is expressed by the formula (S3).

[Chemical formula 4]

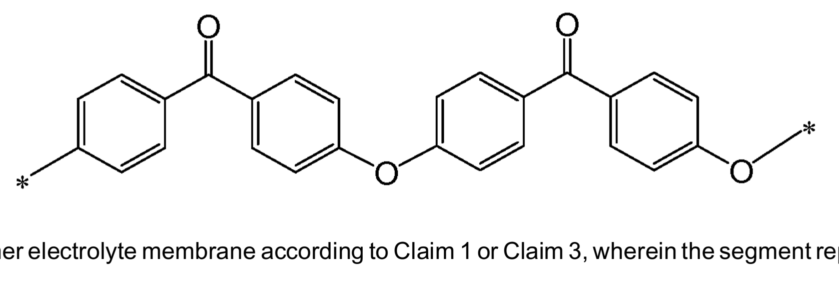

(S3)

4. The polymer electrolyte membrane according to Claim 1 or Claim 3, wherein the segment represented by the general

formula (S1) is expressed by the formula (S4),

[Chemical formula 5]

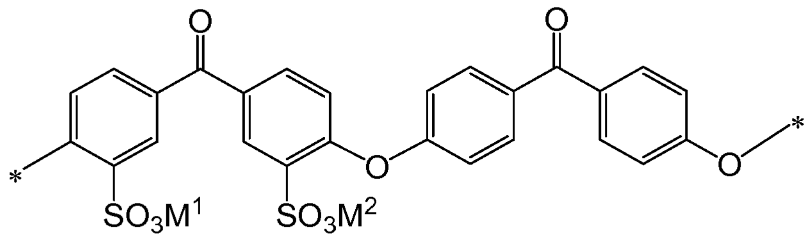

(S4)

where, in the formula (S4), $M^1$ and $M^2$ are each hydrogen, metal cation, or ammonium cation; and $M^1$ and $M^2$ can be two or more kinds of groups.

**5.** A polymer electrolyte membrane with catalyst layer, including the polymer electrolyte membrane according to any of Claims 1 to 4.

**6.** A membrane electrode assembly including the polymer electrolyte membrane according to any of Claims 1 to 4.

**7.** A polymer electrolyte fuel cell including the polymer electrolyte membrane according to any of Claims 1 to 4.

## Patentansprüche

**1.** Polymerelektrolytmembran, umfassend ein Blockcopolymer, enthaltend jeweils ein oder mehrere: Segmente (A1), welche eine ionische Gruppe enthalten; und Segmente (A2), welche keine ionische Gruppe enthalten, und eine oder mehrere funktionelle Linkergruppen, welche dazu fähig sind, das Segment (A1) mit dem Segment (A2), während eines Unterdrückens einer Randomisierung und einer Segmentspaltung durch die Etheraustauschreaktion, zu verbinden; wobei ein zahlenmittleres Molekulargewicht des Segments (A1) 15000 oder größer ist; wobei das molare Zusammensetzungsverhältnis des Segments (A1) zu dem Segment (A2), (A1)/(A2), 0,15 oder größer und 5 oder kleiner ist; die ionische Gruppe eine Sulfonsäuregruppe ist; wobei die Ionenaustauschkapazität des Blockcopolymers 1,4 meq/g oder größer ist; die Polymerelektrolytmembran eine cokontinuierliche oder lamellare phasengetrennte Struktur ausbildet; deren cyclische Länge 100 nm oder kleiner ist; und eine Kristallisationswärmemenge, welche durch dynamische Differenzkalorimetrie bestimmt wird, 0,1 J/g oder größer ist, oder ein Grad der Kristallinität, welcher durch Weitwinkel-Röntgendiffraktometrie bestimmt wird, 0,5 % oder größer ist,
wobei das Segment (A1), welches eine ionische Gruppe enthält, die Bestandteileinheit, welche durch die allgemeine Formel (S1), die unten beschrieben ist, enthält,

[Chemische Formel 3]

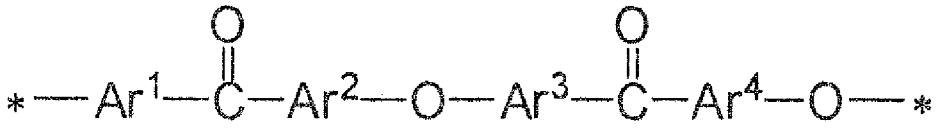

(S1)

wobei in der allgemeinen Formel (S1) $Ar^1$ bis $Ar^4$ jeweils beliebige divalente Arylengruppen sind; $Ar^1$ und/oder $Ar^2$ eine ionische Gruppe enthält; $Ar^3$ und $Ar^4$ eine ionische Gruppe enthalten oder nicht enthalten können; $Ar^1$ bis $Ar^4$ jeweils beliebig substituiert sein können, und in $Ar^1$ bis $Ar^4$ zwei oder mehr Arten von Arylengruppen unabhängig verwendet werden können; und das Symbol * einen Bindungsrest mit der allgemeinen Formel (S1) oder mit einer anderen Bestandteileinheit darstellt,
wobei das Segment (A1), welches eine ionische Gruppe enthält, 20 mol% oder mehr der Bestandteileinheit, welche durch die allgemeine Formel (S1) dargestellt ist, enthält,
wobei das Segment (A2), welches keine ionische Gruppe enthält, eine Bestandteileinheit, welche durch die allgemeine Formel (S2) dargestellt ist, welche unten beschrieben ist, enthält

[Chemische Formel 2]

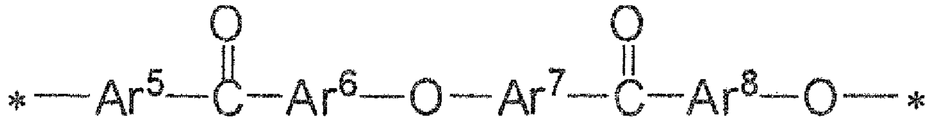 (S2)

wobei in der allgemeinen Formel (S2) $Ar^5$ bis $Ar^8$ jeweils eine beliebige zweiwertige Arylengruppen sind, welche jeweils beliebig substituiert sein kann, und welche keine ionische Gruppe enthält; in $Ar^5$ bis $Ar^8$ zwei oder mehr Arten von Arylengruppen unabhängig verwendet werden können; und das Symbol * einen Bindungsrest mit der allgemeinen Formel (S2) oder mit einer anderen Bestanteileinheit darstellt, und wobei das Segment (A2), welches keine ionische Gruppe enthält, 20 mol% oder mehr der Bestandteileinheit, welche durch die allgemeine Formel (S2) dargestellt ist, enthält.

2. Polymerelektrolytmembran nach Anspruch 1, wobei das Blockcopolymer ein aromatisches polyetherketonbasiertes Polymer ist.

3. Polymerelektrolytmembran nach Anspruch 1, wobei das Segment, welches durch die allgemeine Formel (S2) dargestellt ist, durch die Formel (S3) ausgedrückt ist.

[Chemische Formel 4]

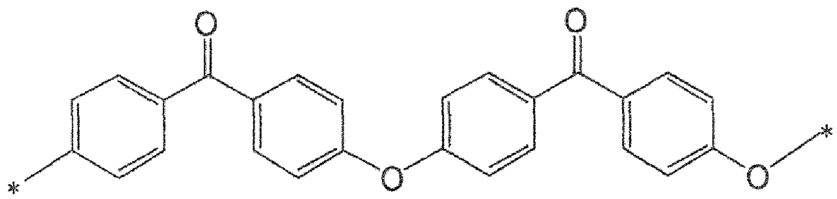 (S3)

4. Polymerelektrolytmembran nach Anspruch 1 oder 3, wobei das Segment, welches durch die allgemeine Formel (S1) dargestellt ist, durch die Formel (S4) ausgedrückt ist,

[Chemische Formel 5]

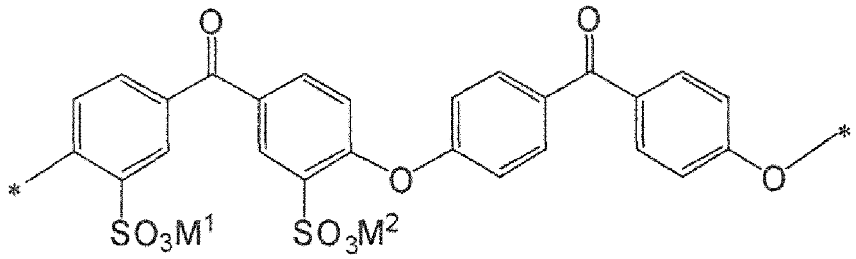 (S4)

wobei in der Formel (S4) $M^1$ und $M^2$ jeweils Wasserstoff, ein Metallkation, oder ein Ammoniumkation sind; und $M^1$ und $M^2$ zwei oder mehr Arten von Gruppen sein können.

5. Polymerelektrolytmembran mit einer Katalysatorschicht, umfassend die Polymerelektrolytmembran nach einem der Ansprüche 1 bis 4.

6. Membranelektrodenanordnung, umfassend die Polymerelektrolytmembran nach einem der Ansprüche 1 bis 4.

7. Polymerelektrolytbrennstoffzelle, umfassend die Polymerelektrolytmembran nach einem der Ansprüche 1 bis 4.

## Revendications

**1.** Membrane électrolytique polymère comprenant un copolymère à blocs contenant chacun un ou plusieurs parmi : un segment (A1) contenant un groupe ionique ; et un segment (A2) ne contenant pas de groupe ionique, et un ou plusieurs groupes(s) lieur(s) qui est/sont capable(s) de relier le segment (A1) au segment (A2) tout en supprimant la randomisation et la découpe de segments par la réaction d'échange d'éther ; où un poids moléculaire moyen en nombre du segment (A1) est supérieur ou égal à 15000 ; où le rapport de composition molaire du segment (A1) sur le segment (A2), (A1)/(A2), est supérieur ou égal à 0,15 et inférieur ou égal à 5 ; le groupe ionique est un groupe acide sulfonique ; où la capacité d'échange d'ions du copolymère à blocs est supérieure ou égale à 1,4 meq/g ; la membrane électrolytique polymère forme une structure co-continue ou lamellaire à séparation de phases ; dont la longueur de cycle est inférieure ou égale à 100 nm ; et une quantité de chaleur de cristallisation déterminée par analyse calorimétrique différentielle est supérieure ou égale à 0,1 J/g, ou un degré de cristallinité déterminé par diffractométrie aux rayons X à grand angle est supérieur ou égal à 0,5%,
où le segment (A1) contenant un groupe ionique contient l'unité constitutive représentée par une formule générale (S1) décrite ci-dessous,

[Formule chimique 3]

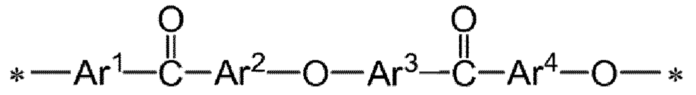 (S1)

où, dans la formule générale (S1), $Ar^1$ à $Ar^4$ représentent chacun un groupe arylène divalent arbitraire ; $Ar^1$ et/ou $Ar^2$ contient/contiennent un groupe ionique ; $Ar^3$ et $Ar^4$ peuvent contenir ou non un groupe ionique ; $Ar^1$ à $Ar^4$ peuvent chacun être arbitrairement substitués, et dans $Ar^1$ à $Ar^4$, deux types de groupes arylène ou plus peuvent être utilisés indépendamment ; et le symbole * désigne un groupe de liaison avec la formule générale (S1) ou avec une autre unité constitutive,
où le segment (A1) contenant un groupe ionique contient 20% en mole ou plus de l'unité constitutive représentée par la formule générale (S1),
où le segment (A2) ne contenant pas de groupe ionique contient une unité constitutive représentée par une formule générale (S2) décrite ci-dessous,

[Formule chimique 2]

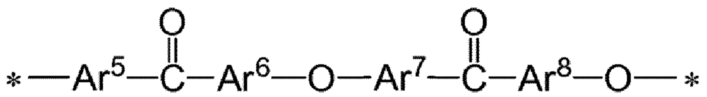 (S2)

où, dans la formule générale (S2), $Ar^5$ à $Ar^8$ représentent chacun un groupe arylène divalent arbitraire, qui peuvent chacun être arbitrairement substitués, et qui ne contiennent pas de groupe ionique ; dans $Ar^5$ à $Ar^8$, deux types de groupe arylène ou plus peuvent être utilisés indépendamment ; et le symbole * désigne un groupe de liaison avec la formule générale (S2) ou avec une autre unité constitutive, et
où le segment (A2) ne contenant pas de groupe ionique contient 20% en mole ou plus de l'unité constitutive représentée par la formule générale (S2).

**2.** Membrane électrolytique polymère selon la revendication 1, dans laquelle le copolymère à blocs est un polymère aromatique à base de polyéthercétone.

**3.** Membrane électrolytique polymère selon la revendication 1, dans laquelle le segment représenté par la formule générale (S2) est exprimé par la formule (S3).

[Formule chimique 4]

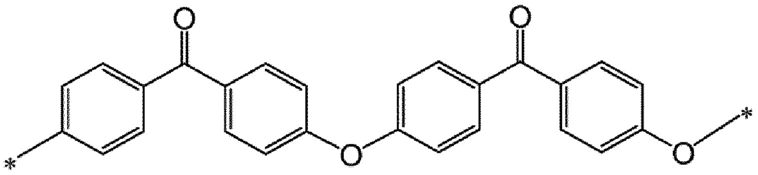

(S3)

4. Membrane électrolytique polymère selon la revendication 1 ou 3, dans laquelle le segment représenté par la formule générale (S1) est exprimé par la formule (S4),

[Formule chimique 5]

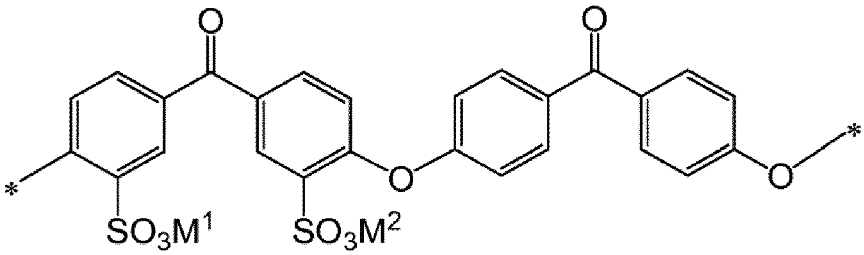

(S4)

où, dans la formule (S4), $M^1$ et $M^2$ représentent chacun un atome d'hydrogène, un cation métallique ou un cation ammonium ; et $M^1$ et $M^2$ peuvent être deux types de groupes ou plus.

5. Membrane électrolytique polymère à couche de catalyseur, comportant la membrane électrolytique polymère selon l'une des revendications 1 à 4.

6. Ensemble membrane-électrodes comportant la membrane électrolytique polymère selon l'une des revendications 1 à 4.

7. Pile à combustible à électrolyte polymère comportant la membrane électrolytique polymère selon l'une des revendications 1 à 4.

Fig. 1

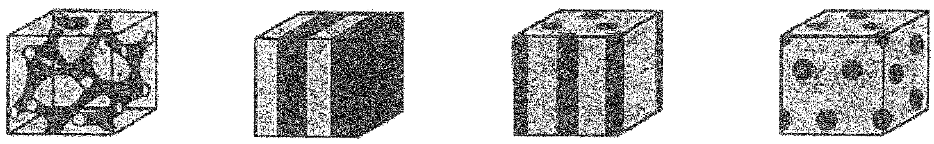

(M1) (M2) (M3) (M4)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005190830 A
- JP 2005216525 A
- JP 2011023308 A
- JP 2005126684 A
- WO 2008018487 A
- JP 2016126 A
- JP 2208322 A
- JP 2009009910 A


### Non-patent literature cited in the description


- *Annual Review of Physical Chemistry,* 1990, vol. 41, 525
- *Journal of Membrane Science,* 2002, vol. 197, 231-242
- *Polymer Preprints,* 2002, vol. 51, 750
- **THEODORA W. GREENE.** Protective Groups in Organic Synthesis. John Wiley & Sons, Inc, 1981
- J. Electrochem. Soc. Electrochemical Society of Japan, 1985, vol. 53, 269
- *Electrochemical Science and Technology,* 1988, vol. 135 (9), 2209